(19) Europäisches Patentamt
European Patent Office
Office européen des brevets

(11) Veröffentlichungsnummer: **0 337 948 B1**

(12) **EUROPÄISCHE PATENTSCHRIFT**

(45) Veröffentlichungstag der Patentschrift: **08.12.93**

(51) Int. Cl.5: **C09B 29/08**, C09B 23/14, D06P 1/16

(21) Anmeldenummer: **89810260.3**

(22) Anmeldetag: **05.04.89**

(54) **Dispersionsfarbstoffe.**

(30) Priorität: **14.04.88 CH 1381/88**

(43) Veröffentlichungstag der Anmeldung:
**18.10.89 Patentblatt 89/42**

(45) Bekanntmachung des Hinweises auf die Patenterteilung:
**08.12.93 Patentblatt 93/49**

(84) Benannte Vertragsstaaten:
**BE CH DE ES FR GB IT LI**

(56) Entgegenhaltungen:
**FR-A- 2 108 710**
**FR-A- 2 301 571**
**GB-A- 824 443**
**GB-A- 1 458 369**
**JP-A-71 023 508**

(73) Patentinhaber: **CIBA-GEIGY AG**
**Klybeckstrasse 141**
**CH-4002 Basel(CH)**

(72) Erfinder: **Liechti, Peter, Dr.**
**Alte Olsbergerstrasse 17**
**CH-4422 Arisdorf(CH)**
Erfinder: **Emmenegger, Karl**
**Augsterstrasse 19**
**CH-4133 Pratteln(CH)**
Erfinder: **Trottmann, Martin, Dr.**
**Stallenmattstrasse 22**
**CH-4104 Oberwil(CH)**

EP 0 337 948 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betriff neue Dispersionsfarbstoffe, Verfahren zu deren Herstellung sowie Verfahren zum Färben und Bedrucken unter Verwendung dieser Farbstoffe.

Dispersionsfarbstoffe, d.h. Farbstoffe, welche keine wasserlöslichmachenden Gruppen enthalten, sind seit langem bekannt und werden als Farbstoffe z.B. zum Färben von hydrophobem Textilmaterial verwendet. Vielfach sind die erhaltenen Färbungen jedoch nicht ausreichend thermomigrierecht.

Zur Behebung dieses Mangels wurden schon spezielle Farbstoffe entwickelt, deren Diffusionsvermögen infolge ihrer molekularen Grösse und/oder Sperrigkeit möglichst niedrig ist. Dies erschwert jedoch oft die Anwendbarkeit solcher Farbstoffe, da man mit ihnen nicht oder nur schlecht nach dem Ausziehverfahren färben kann und diese Farbstoffe sogar im Thermosol-Verfahren meistens unerwünscht hohe Fixiertemperaturen erfordern.

Aus der Fr-A-2 301 571 und der GB-A-1,458,369 sind Farbstoffe bekannt, die sich in charakteristischer Weise durch spezifische Benzisothiazole, bzw. Dinitrohalogenanilin als Diazokomponente und spezifische Naphthylamine als Kupplungskomponente von den erfindungsgemässen Farbstoffen unterscheiden. GB-A-824,443 offenbart Azofarbstoffe, die sich in charakteristischer Weise durch spezifische Aniline als Kupplungskomponente von den erfindungsgemässen Farbstoffen unterscheiden. Die aus dem Stand der Technik bekannten Farbstoffe weisen aber nicht alle vorteilhaften Eigenschaften der erfindungsgemässen Farbstoffe auf.

Gegenstand der vorliegenden Erfindung sind nun Dispersionsfarbstoffe, welche auf übliche Art und Weise applizierbar sind und durch eine thermische Nachbehandlung in eine thermomigrierechte Form übergeführt werden können.

Die erfindungsgemässen Farbstoffe sind dadurch gekennzeichnet, dass sie an einem wasserunlöslichen Chromophor einen Rest enthalten, aus welchem sich beim Erhitzen auf eine Temperatur von oberhalb 150 °C eine Isocyanat- oder Isothiocyanatgruppe bildet.

Die erfindungsgemässe Farbstoffe entsprechen der Formel

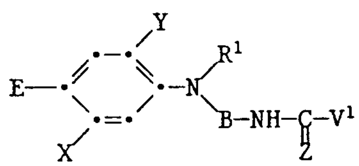

(1)

worin

E D-N = N- oder

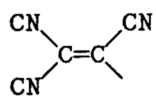

bedeutet, wobei D der Rest einer carbocyclischen oder heterocyclischen Diazokomponente mit Ausnahme von Aminobenzisothiazol ist,

X Wasserstoff, $C_1$-$C_4$-Alkyl, $C_1$-$C_4$-Alkoxy, Acylamino, Halogen, $C_1$-$C_4$-Alkylsulfonylamino oder eine Gruppe der Formel -NH-CO-NHQ, worin Q Wasserstoff, $C_1$-$C_4$-Alkyl oder Phenyl ist,

Y Wasserstoff, Halogen, $C_1$-$C_4$-Alkyl, $C_1$-$C_4$-Alkoxy, $C_1$-$C_4$-Alkoxy-$C_1$-$C_4$-alkyl oder $C_1$-$C_4$-Alkoxy-$C_2$-$C_4$-alkoxy,

$R^1$ $C_1$-$C_{12}$-Alkyl, $C_2$-$C_6$-Alkenyl oder Phenyl, oder Y und $R^1$, zusammen mit dem Stickstoffatom und den beiden sie verbindenden C-Atomen, einen 5- oder 6-gliedrigen Ring bilden,

B einen geradkettigen oder verzweigten $C_2$-$C_6$-Alkylenrest,

Z O oder S und

$V^1$ einen Rest

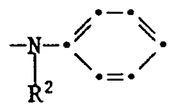 , 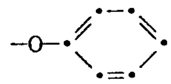 ,

$-NHR^6$,

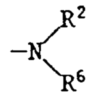 oder 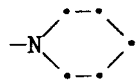

bedeutet, welcher im Phenylring ggf. substituiert ist durch $C_1$-$C_4$-Alkyl oder -Alkoxy, $C_1$-$C_4$-Alkoxycarbonyl oder Halogen, wobei

$R^2$ $C_1$-$C_6$-Alkyl und

$R^6$ $C_1$-$C_6$-Alkyl oder $C_5$-$C_7$-Cycloalkyl bedeutet, wobei in den Azofarbstoffen die Diazokomponente D kein gegebenenfalls substituiertes Aminobenzisothiazol ist und wobei die Kupplungskomponente kein N-($\beta$-phenylureidoethyl)-1-naphthylamin ist, wenn die Diazokomponente 2,4-Dinitro-6-brom-anilin ist.

Die Gruppe $V^1$ wird bei erhöhter Temperatur als Rest $HV^1$ abgespalten, wobei Isocyanat-, bzw. Isothiocyanatverbindungen entstehen, welche mit geeigneten Gruppen in der Umgebung reagieren können.

Eine weitere Klasse der erfindungsgemässen Farbstoffe entspricht der Formel

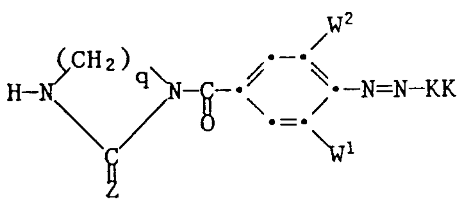 (2)

worin

| | |
|---|---|
| Z | O oder S, |
| $W^1$ und $W^2$ | unabhängig voneinander Wasserstoff, $C_1$-$C_4$-Alkyl, CN, $CF_3$, $C_1$-$C_4$-Alkylsulfonyl, Halogen, wie Brom oder Chlor, oder Nitro, und |
| q | eine ganze Zahl von 2 bis 6 und |
| KK | den Rest einer Kupplungskomponente bedeutet. |

Falls in den Farbstoffen der Formel (1) E einen Rest D-N = N- darstellt, so bedeutet D den Rest einer homo- oder heterocyclischen Diazokomponente, z.B. aus der Reihe Thienyl, Phenylazothienyl, Thiazolyl, Isothiazolyl, 1,2,4-Thiadiazolyl, 1,3,4-Thiadiazolyl, Benzthiazolyl, Pyrazolyl, 1,2,3-Triazolyl, 1,2,4-Triazolyl, Imidazolyl, oder Phenyl.

Jedes dieser Systeme kann weitere Substituenten tragen wie Alkyl, Alkoxy oder Alkylthio mit je 1 bis 4 Kohlenstoffatomen, Phenyl, elektronegative Gruppen wie Halogen, besonders Chlor oder Brom, Trifluormethyl, Cyano, Nitro, Acyl, wie z.B Acetyl oder Benzoyl, Carboalkoxy, besonders Carbomethoxy oder Carboethoxy, Alkylsulfon mit 1 bis 4 Kohlenstoffatomen, Phenylsulfon, Phenoxysulfon, Sulfonamido oder Arylazo, insbesondere Phenylazo. Je 2 benachbarte Substituenten der genannten Ringsysteme können auch zusammen weitere ankondensierte Ringe bilden, z.B. Phenylringe oder cyclische Imide.

Vorzugsweise bedeutet D einen Benzthiazolyl- oder Phenylrest, welcher unsubstituiert oder ein- oder zweimal durch einen der obengenannten Reste substituiert ist.

Als Benzthiazolylrest stellt D vor allem einen unsubstituierten oder einen ein- oder mehrmals durch Methyl, Methoxy, Chlor, Methylsulfon oder Nitro substituierten Benzthiazolylrest dar.

Die bevorzugte Bedeutung von D ist Phenyl, welches maximal mit 4, gegebenenfalls verschiedenen, Substituenten aus der oben genannten Aufzählung substituiert ist. Von den aufgezählten Substituenten sind elektronegative bevorzugt. Diese können vor allem Cyano, Methyl- oder Ethylsulfonyl, Nitro, Chlor, Brom, Formyl, Acetyl, Benzoyl, Carbomethoxy, Carboethoxy, Methoxy, Ethoxy oder Phenylazo sein.

Unter Alkylgruppen sind in dieser Anmeldung generell geradkettige oder verzweigte oder cyclische Alkylgruppen zu verstehen, z.B. solche mit 1 bis 12 Kohlenstoffatomen. Es handelt sich z.B. um Methyl, Ethyl, Propyl, i-Propyl, Butyl, i-Butyl, tert.-Butyl, Amyl, tert.-Amyl (1,1-Dimethylpropyl), 1,1,3,3-Tetramethylbutyl, Hexyl, 1-Methylpentyl, Neopentyl, 1-, 2- oder 3-Methylhexyl, Heptyl, n-Octyl, tert. Octyl, 2-Ethylhexyl, n-Nonyl, Isononyl, Decyl, Dodecyl, Cyclopentyl, Cyclohexyl, Methylcyclohexyl sowie die dazugehörenden Isomeren.

Diese Alkylreste können substituiert sein, z.B. durch Hydroxy, Alkoxy mit 1 bis 4 Kohlenstoffatomen, insbesondere Methoxy, Halogen, wie Brom oder Chlor, Cyano oder Phenyl. Als weitere Substituenten sind geeignet Halogen, wie Fluor, Chlor oder Brom, oder -CO-U oder -O-CO-U, worin U Alkyl mit 1 bis 6 Kohlenstoffatomen oder Phenyl ist.

Als Alkenylreste kommen solche Reste in Betracht, welche sich von den oben aufgeführten Alkylresten durch Ersatz mindestens einer Einfachbindung durch eine Doppelbindung ableiten. Geeignete Reste sind z.B. Ethenyl oder Propenyl.

Geeignete Alkoxyreste sind z.B. Methoxy, Ethoxy, Propoxy, iso-Propoxy, n-Butoxy, i-Butoxy oder tert.-Butoxy.

Beispiele für geeignete substituierte Alkylreste sind: Methoxymethyl, Ethoxymethyl, Ethoxyethyl, Ethoxypropyl, n-Propoxymethyl, iso-Propoxymethyl, Butoxymethyl, Butoxyethyl, Butoxypropyl, Ethoxypentyl, Methoxybutyl, Ethoxypentyl, 2-Hydroxyethoxypentyl, Cyanethyl, Hydroxyethyl oder Acetoxyethyl.

Auch die Alkylenreste B können geradkettig oder verzweigt oder auch substituiert sein. Es kommen z.B. Ethylen, 1,3-Propylen, 1,5-Pentylen, 1,2-Propylen, 1,2-Butylen, 1,6-Hexylen, 2-Hydroxy-1,3-propylen oder 2-Chlor-1,3-propylen in Frage.

Falls X eine Acylaminogruppe darstellt, so handelt es sich z.B. um eine Gruppe der Formel

$$- NH - U - R^3 \quad (3)$$

wobei U -CO- oder $-SO_2-$ und $R^3$ gegebenenfalls substituiertes Alkyl oder Phenyl bedeutet.

Es handelt sich bei dem Acylrest z.B. um den Acetyl-, Propionyl-, 2-Chlorethylcarbonyl, 2-Bromethylcarbonyl-, Phenylcarbonyl-, 2-Methoxycarbonylethylcarbonyl-, 2-Ethoxycarbonylethylcarbonyl-, Methoxycarbonyl-, Ethoxycarbonyl-, Phenoxycarbonyl, Methoxyethylcarbonyl-, Hydroxyethylcarbonyl-, Methylsulfonyl- oder Ethylsulfonylrest.

Ist X eine Gruppe der Formel -NH-CO-NHQ, so handelt es sich z.B. um die Ureido-, Methylureido-, Ethylureido- oder Phenylureidogruppe.

Unter Phenylresten sind in dieser Anmeldung generell unsubstituierte oder substituierte Phenylreste zu verstehen. Als Substituenten kommen z.B. $C_1$-$C_4$-Alkyl, $C_1$-$C_4$-Alkoxy, Brom, Chlor, Nitro oder $C_1$-$C_4$-Alkylcarbonylaminoin Betracht.

Halogen bedeutet in dieser Anmeldung generell Fluor, Brom oder vor allem Chlor.

$R^1$ und Y können zusammen mit dem Stickstoffatom und den beiden sie verbindenden C-Atomen einen 5- oder 6-gliedrigen Ring bilden, welcher gegebenenfalls ein Sauerstoffatom als weiteres Heteroatom enthalten kann. Geeignete Substituenten für diese Ringe sind z.B. Hydroxy, Methyl, Methoxy, Chlor oder Phenyl. Vorzugsweise bilden $R^1$ und Y zusammen mit dem Stickstoffatom und den beiden sie verbindenden C-Atomen einen 6-gliedrigen Ring, welcher unsubstituiert ist oder 1 bis 4 Methylgruppen trägt. Es handelt sich also vor allem um Di- oder Tetrahydrochinolinverbindungen mit 0 bis 4 Methylgruppen.

In besonders bevorzugten Dispersionsfarbstoffen ist D ein Benzthiazolylrest, welcher unsubstituiert ist oder ein- oder zweimal durch Chlor substituiert ist, oder ein Phenylrest, der ein- oder zweimal substituiert ist durch Nitro, Chlor, Cyan, Methyl- oder Ethylsulfonyl oder Phenylazo.

Die bevorzugten Bedeutungen von X sind Wasserstoff, Methyl, Methoxy, Chlor, Brom, Acetylamino oder Ureido, wobei Wasserstoff, Methyl, Chlor und Acetylamino besonders bevorzugt sind.

Y bedeutet vorzugsweise Chlor, Methyl, Methoxy, Methoxyethyl oder Methoxyethoxy oder vor allem Wasserstoff.

Die bevorzugte Bedeutung von $R^2$ ist $C_1$-$C_4$-Alkyl, welches gegebenenfalls substituiert ist durch Hydroxy oder $C_1$-$C_4$-Alkoxy. In besonders bevorzugten Verbindungen der Formel (1) ist $R^2$ Methyl oder Ethyl.

Bevorzugte Gruppen $V^1$ sind Reste

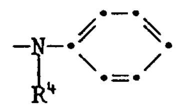 , 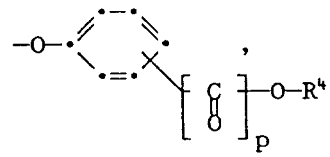 ,

$-NH-(CH_2)_3-CH_3$ oder

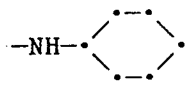 ,

worin $R^4$ $C_1$-$C_4$-Alkyl und p 0 oder 1 bedeutet.

Bei den Farbstoffen der Formel (2) stellt KK den Rest einer Kupplungskomponente dar.

Als Kupplungskomponente KK kommen die in der Azochemie üblichen und aus der einschlägigen Literatur bekannten Kupplungskomponenten in Frage.

Aus der Vielzahl der Möglichkeiten seien beispielsweise erwähnt: Kupplungskomponenten der Benzolreihe, der Naphthalinreihe, der offenkettigen methylenaktiven Verbindungen (wie z.B. der Acylacetarylamide) sowie der heterocyclischen Reihe.

Beispiele für die genannten Reste von Kupplungskomponenten KK sind Reste aus der Reihe der Acylacetarylamide, Phenole, Pyridone, Chinoline, Pyrazole, Indole, Diphenylamin, Aniline, Aminopyridine, Pyrimidine, Pyrimidone, Naphthole, Naphthylamine, Aminothiazole, Thiophene oder Hydroxypyridine.

Besonders zu erwähnende Reste KK sind solche aus der Reihe der Acetoacetanilide, Phenole, Aniline, Diphenylamine, Napthylamine, Naphthole, Indole, Chinoline, Pyridone, Pyrazolone, Chinolone und Aminopyridine.

Diese Kupplungskomponenten können weitere Substituenten tragen, die in der Farbstoffchemie für Kupplungskomponenten üblich sind, beispielsweise Hydroxy, Amino, Alkylamino, Dialkylamino, Halogen, Alkoxy, Aryl, Aryloxy, Alkylcarbonylamino, Arylcarbonylamino oder Alkylsulfonylamino.

Wegen ihrer besonders guten färberischen Eigenschaften sind solche Farbstoffe der Formel (2) besonders bevorzugt, bei denen KK den Rest eines Anilins, Naphthylamins oder Tetrahydrochinolins bedeutet, wobei diese Reste durch $C_1$-$C_4$-Alkyl, $C_1$-$C_4$-Alkylcarbonylamino, Phenyl oder $C_1$-$C_4$-Alkylphenyl substituiert sein können.

Bei den Farbstoffen der Formel (2) stellen $W^1$ und $W^2$ vorzugsweise unabhängig voneinander Wasserstoff, Methyl, Methoxy, Chlor oder Nitro dar und n ist vorzugsweise 3 oder 4.

Besonders wertvolle erfindungsgemässe Farbstoffe entsprechen den Formeln

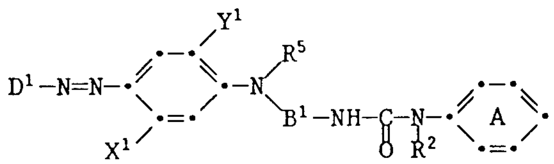

(4)

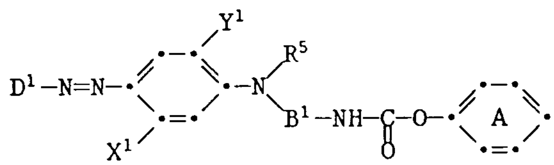

(5)

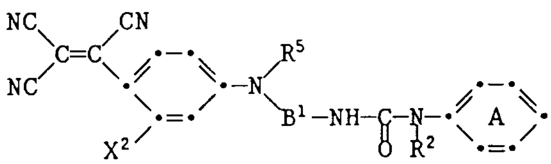

(6)

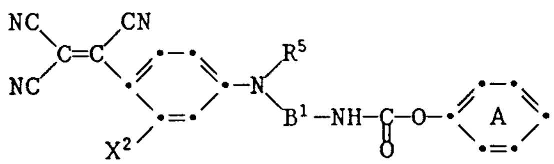

(7)

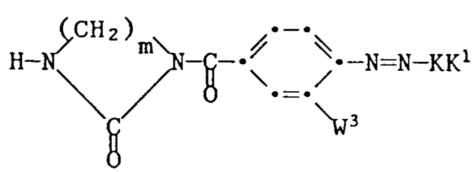

(8)

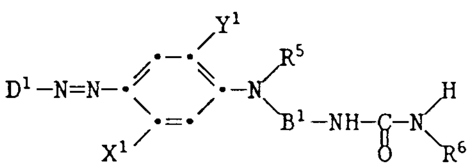

(9)

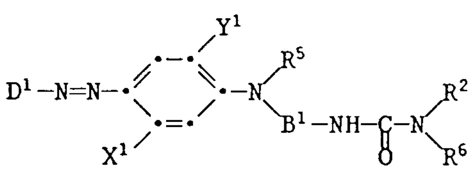

(10)

oder

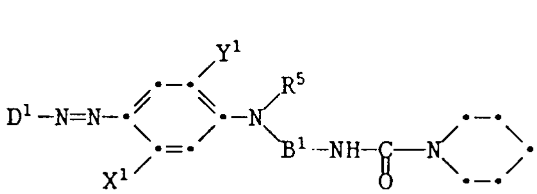

(20)

In den Formeln (4) bis (10) und (20) bedeuten:

- $D^1$ einen Benzthiazolylrest, welcher unsubstituiert ist oder ein- oder zweimal durch Chlor substituiert ist oder einen Phenylrest, der ein-oder zweimal durch Nitro, Halogen, Cyan, Methyl- oder Ethylsulfonyl oder Phenylazo substituiert ist,
- $X^1$ Wasserstoff, Methyl, Methoxy, Chlor, Brom oder $C_1$-$C_4$-Alkanoylamino,
- $Y^1$ Chlor, Methyl, Methoxy, Methoxyethyl, Methoxyethoxy oder Wasserstoff,
- $X^2$ Wasserstoff, Methyl, Methoxy, Chlor oder Brom,
- $R^2$ $C_1$-$C_6$-Alkyl,
- $R^5$ $C_1$-$C_4$-Alkyl, welches unsubstituiert ist oder durch Hydroxy, Cyan, $C_1$-$C_4$-Alkoxy oder Phenyl substituiert ist,
- $R^6$ $C_1$-$C_6$-Alkyl oder $C_5$-$C_7$-Cycloalkyl,
- $B^1$ einen $C_2$-$C_4$-Alkylenrest, welcher unsubstituiert oder durch Hydroxy substituiert ist,
- A einen unsubstituierten oder durch $C_1$-$C_4$-Alkyl, $C_1$-$C_4$-Alkoxy, $C_1$-$C_4$-Alkoxycarbonyl oder Chlor substituierten Phenylring,
- m 2, 3 oder 4,
- $W^3$ Wasserstoff, Methyl, Methoxy, Chlor oder Nitro und
- $KK^1$ den Rest eines Anilins, Naphthylamins oder Tetrahydrochinolins, wobei diese Reste durch $C_1$-$C_4$-Alkyl, $C_1$-$C_4$-Alkylcarbonylamino, Phenyl, $C_1$-$C_4$-Alkylphenyl oder Sulfo substituiert sein können oder den Rest eines Hydroxypyridons, welches durch CN oder $C_1$-$C_{12}$-Alkyl substituiert ist.

Die erfindungsgemässen Farbstoffe werden auf an und für sich bekannte Art und Weise hergestellt, beispielsweise indem man in einen wasserunlöslichen Chromophor, oder in eine Vorstufe eines solchen, einen Rest einführt, welcher beim Erhitzen auf eine Temperatur oberhalb 150 °C eine Isocyanat-oder Isothiocyanatgruppe bildet.

Die erfindungsgemässen Farbstoffe der Formel (1) stellt man z.B. her, indem man ein diazotiertes Amin der Formel

$D\text{-}NH_2$ (11)

oder Tetracyanethylen mit einer Verbindung der Formel

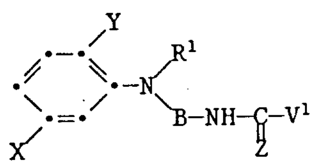 (12)

umsetzt.

Die Verbindungen der Formel (11) sind bekannt oder lassen sich in Analogie zur Herstellung ähnlicher Verbindungen herstellen.

Die Verbindungen der Formel (12) werden z.B. hergestellt, indem man ein Halogenalkylisocyanat oder ein Halogenalkylisothiocyanat der Formel

$Hal\text{-}B\text{-}N=C=Z$ (13)

mit einer Verbindung der Formel

$V^1\text{-}H$ (14)

umsetzt und das erhaltene Reaktionsprodukt der Formel

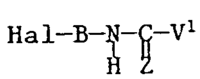 (15)

mit einer Verbindung der Formel

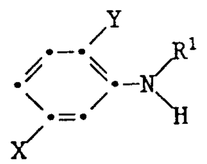

(16)

zur Reaktion bringt.

In den Verbindung (11) bis (16) weisen D, X, Y, $R^1$, B, Z, und $V^1$ die unter der Formel (1) angegebene Bedeutung auf und Hal bedeutet Chlor oder Brom.

Die Verbindungen der Formeln (13) bis (16) sind bekannt oder lassen sich auf an und für sich bekannte Art und Weise herstellen.

Bei der Umsetzung der Verbindung (13) mit der Verbindung (14) arbeitet man vorzugsweise in einem inerten Lösungsmittel und in Gegenwart eines Katalysators, wie z.B. Diazabicyclooctan, und bei einer Temperatur etwa zwischen 0 ° C und 20 ° C. Die Komponenten (13) und (14) können in stöchiometrischem Verhältnis eingesetzt werden, ein Ueberschuss an einer der Komponenten ist jedoch ebenfalls möglich. Nach Beendigung der Umsetzung wird die Verbindung (15) auf übliche Weise, z.B. durch Kristallisation isoliert.

Bei der Umsetzung der Verbindung (15) mit der Verbindung (16) arbeitet man z.B. in einem inerten organischen Lösungsmittel und in Gegenwart einer Base. Als inerte organische Lösungsmittel kommen z.B. Verbindungen mit einem Siedepunkt oberhalb 60 ° C in Frage, wie Alkohole, Ether, Ester, Nitrobenzol, Halogenbenzol, Toluol, Xylole etc. Vor allem geeignet sind Alkohole, wie z.B. Isopropanol, und als Base wird z.B. Natrium- oder Kaliumcarbonat verwendet. Es ist auch möglich, diese Reaktion ohne Lösungsmittel durchzuführen.

Die Komponenten (15) und (16) können in stöchiometrischem Verhältnis eingesetzt werden, ein Ueberschuss an einer der Komponenten, vorzugsweise der Verbindung (16), erweist sich jedoch oft als günstiger.

Die Reaktionstemperatur liegt etwa zwischen 50 und 120 ° C, vorzugsweise zwischen 60 und 100 ° C und die Reaktionsdauer beträgt, je nach Temperatur und Reaktionspartnern etwa 1 bis 20 Stunden. Nach Beendigung der Umsetzung wird die evtl. im Ueberschuss eingesetzte Komponente (16) und das Lösungsmittel entfernt und der Rückstand evtl. gereinigt, z.B. durch Umkristallisation. Die Diazotierung der Verbindung (11) und die Kupplung mit der Verbindung (12) erfolgen nach den üblichen Methoden.

Die Umsetzung der Verbindungen der Formel (12) mit Tetracyanethylen erfolgt auf an sich bekannte Art und Weise, vorzugsweise in einem inerten Lösungsmittel bei einer Temperatur zwischen etwa 20 und 100 ° C, wobei die Reaktionskomponenten in etwa äquivalenten Mengen eingesetzt werden.

Als inertes Lösungsmittel für die vorstehende Reaktion kommen z.B. Halogenverbindungen wie Chloroform oder Chlorbenzol, Ether, aromatische Verbindungen, wie Benzol, Toluol oder Xylol, insbesondere jedoch Pyridin oder Dimethylformamid in Frage.

Die Isolierung der Farbstoffe der Formel (1) erfolgt z.B. indem man die Reaktionslösungen in Eiswasser giesst, den ausgeschiedenen Farbstoff abfiltriert, eventuell wäscht und trocknet.

Die Farbstoffe der Formel (2) stellt man z.B. her, indem man eine Verbindung der Formel

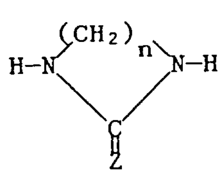

(17)

mit einer Verbindung der Formel

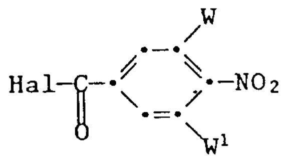

(18)

umsetzt, das erhaltene Reaktionsprodukt der Formel

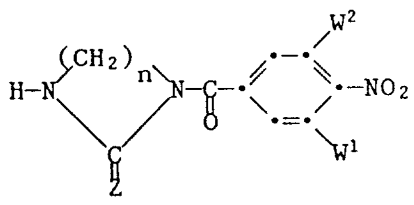

(19)

auf an sich bekannte Art und Weise zum entsprechenden Amin reduziert, dieses diazotiert und mit einer Kupplungskomponente H-KK kuppelt.

Die erfindungsgemässen Farbstoffe können zum Färben und Bedrucken von halbsynthetischen und insbesondere synthetischen hydrophoben Fasermaterialien, vor allem Textilmaterialien, verwendet werden. Textilmaterialien aus Mischgeweben, die derartige halbsynthetische bzw. synthetische hydrophobe Textilmaterialien enthalten, können ebenfalls mit Hilfe der erfindungsgemässen Verbindungen gefärbt oder bedruckt werden.

Synthetische hydrophobe Textilmaterialien bestehen vor allem aus linearen, aromatischen Polyestern, beispielsweise solchen aus Terephthalsäure und Glykolen, besonders Ethylenglykol oder Kondensationsprodukten aus Terephthalsäure und 1,4-Bis-(hydroxymethyl)-cyclohexan; aus Polycarbonaten, z.B. solchen aus $\alpha,\alpha$-Dimethyl-4,4'-dihydroxy-diphenylmethan und Phosgen, aus Fasern auf Polyvinylchlorid- sowie Polyamid-Basis.

Die Applikation der erfindungsgemässen Verbindungen auf die Textilmaterialien erfolgt nach bekannten Färbeverfahren. Beispielsweise färbt man Polyesterfasermaterialien im Ausziehverfahren aus wässriger Dispersion in Gegenwart von üblichen anionischen oder nichtionischen Dispergiermitteln und gegebenenfalls üblichen Quellmitteln (Carriern) bei Temperaturen zwischen 80 und 140 °C. Fasermaterialien aus Cellulose-2 1/2-acetat färbt man vorzugsweise zwischen ungefähr 65 bis 85 °C und solche aus Cellulosetriacetat bei Temperaturen bis zu 115 °C.

Einige der erfindungsgemässen Farbstoffe eignen sich aber vor allem zum Färben nach dem Thermosol-Verfahren.

Das genannte Textilmaterial kann dabei in den verschiedensten Verarbeitungsformen vorliegen, wie z.B. als Faser, Faden oder Vlies, als Gewebe oder Gewirke.

Es ist vorteilhaft, die erfindungsgemässen Farbstoffe vor ihrer Verwendung in ein Farbstoffpräparat überzuführen. Hierzu wird der Farbstoff vermahlen, so dass seine Teilchengrösse im Mittel zwischen 0.01 und 10 Mikron beträgt. Das Vermahlen kann in Gegenwart von Dispergiermitteln erfolgen. Beispielsweise wird der getrocknete Farbstoff mit einem Dispergiermittel gemahlen oder in Pastenform mit einem Dispergiermittel geknetet und hierauf im Vakuum oder durch Zerstäuben getrocknet. Mit den so erhaltenen Präparaten kann man nach Zugabe von Wasser färben und bedrucken.

Beim Bedrucken wird man die üblichen Verdickungsmittel verwenden, z.B. modifizierte oder nichtmodifizierte natürliche Produkte, beispielsweise Alginate, British-Gummi, Gummi arabicum, Kristallgummi, Johannisbrotkernmehl, Tragant, Carboxymethylcellulose, Hydroxyethylcellulose, Stärke oder synthetische Produkte, beispielsweise Polyacrylamide, Polyacrylsäure oder deren Copolymere oder Polyvinylalkohole.

Nach dem eigentlichen Färbeverfahren werden die erhaltenen Färbungen einer thermischen Nachbehandlung unterworfen, z.B. indem man sie 30 bis 500 Sekunden, vorzugsweise 45 bis 200 Sekunden auf eine Temperatur zwischen 180 und 240 °C, vorzugsweise zwischen 200 und 230 °C erhitzt. Durch diese thermische Nachbehandlung wird die Thermomigrierechtheit der Färbungen wesentlich verbessert, da die Farbstoffe unter Abspaltung der entsprechenden Reste in Farbstoffe mit Isocyanat- oder Isothiocyanatgruppen umgewandelt werden. Diese Gruppen können dann mit geeigneten Gruppen der Fasern oder der auf den Fasern vorhandenen Chemikalien, z.B. mit Amin- oder Hydroxygruppen reagieren.

Falls die Färbungen nach dem Thermosolverfahren hergestellt wurden, welches normalerweise eine Hitzefixierung bei etwa 180 - 210 °C beinhaltet, so kann bei einem Teil der erfindungsgemässen Farbstoffe eine gesonderte thermische Nachbehandlung entfallen. Andernfalls empfiehlt es sich, die Hitzefixierung bei erhöhter Temperatur, z.B. 200 bis 230 °C und/oder während einer längeren Dauer, z.B. 120 bis 300 Sekunden durchzuführen.

Die erfindungsgemässen Farbstoffe verleihen den genannten Materialien, vor allem dem Polyestermaterial, egale gelbe bis blaue Farbtöne von sehr guten Gebrauchs-Echtheiten, wie vor allem guter Lichtechtheit, Sublimierechtheit, Thermofixier-, Plissier-, Chlor- und Nassechtheit wie Wasser-, Schweiss- und Waschechtheit; die Ausfärbungen sind ferner gekennzeichnet durch gute Reibechtheit und Thermofixierechtheit. Es werden ausserdem sehr farbstarke Färbungen erzielt.

Die folgenden Beispiele veranschaulichen die Erfindung weiter, ohne sie darauf zu beschränken. Teile und Prozente beziehen sich, sofern nicht anders angegeben, auf das Gewicht.

Beispiel 1: Eine in üblicher Weise aus 3,45 g 2-Chlor-4-nitroanilin hergestellte Diazoniumchloridlösung wird innerhalb von 20 Minuten bei 0 bis 5 °C in eine Lösung der Kupplungskomponente der Formel

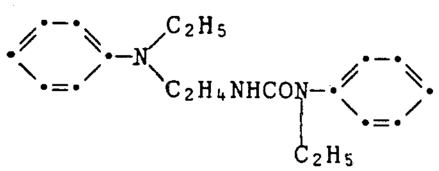

in 100 ml Eisessig getropft. Nach dreistündigem Nachrühren bei 0 bis 5 °C, Nutschen, Waschen und Trocknen erhält man 4,4 g des rohen Farbstoffes der Formel

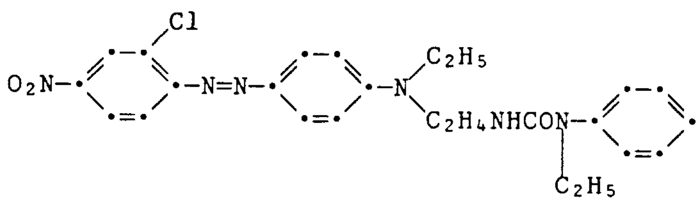

als braunes Pulver vom Schmelzpunkt 166-169 °C. Säulenchromatographische Reinigung an Kieselgel mit Ethylacetat als Eluiermittel ergibt grüne, metallisch glänzende Kristalle vom Schmelzpunkt 190-192 °C. Der Farbstoff färbt Polyestermaterial in roten Nuancen.

Die verwendete Kupplungskomponente wird wie folgt hergestellt:

21,2 g Chlorethylisocyanat werden innerhalb von 30 Minuten zu einer Lösung von 24.4 g N-Ethylanilin und 0.2 g Diazabicyclooctan in 160 ml wasserfreiem Diethylether getropft. Nach zweistündigem Nachrühren bei 0 bis 5 °C, Nutschen und Trocknen erhält man 29,1 g des Chlorethylharnstoffs der Formel

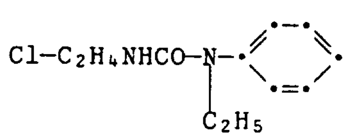

als weisses Pulver vom Schmelzpunkt 92-93 °.

11,35 g davon werden mit 6,5 g N-Ethylanilin in 50 ml Isopropanol in Gegenwart von 5,5 g feinem Natriumcarbonatpulver und 0,5 g Natriumjodid 5 Stunden bei Rückflusstemperatur gerührt. Dann wird durch Abfiltrieren und Nachwaschen vom anorganischen Material getrennt und aus dem Filtrat das Lösungsmittel und anschliessend das nicht umgesetzte Ethylanilin im Vakuum entfernt. Man erhält 11 g der rohen Kupplungskomponente als trübes gelbliches Oel, das ohne Reinigung eingesetzt wird.

Beispiel 2: Ersetzt man im Beispiel 1 das Chlornitroanilin durch die äquivalente Menge 4-Nitroanilin, so erhält man ein ähnlicher Ausbeute und Reinheit den Farbstoff der Formel

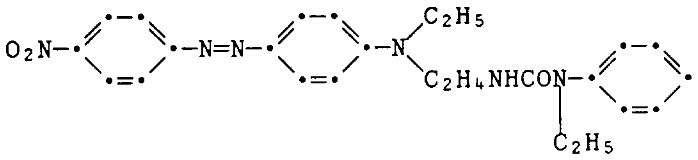

als rotbraunes Pulver vom Smp. 158-160 °C. Der Farbstoff färbt Polyestermaterial in roten Nuancen.

Beispiel 3: Ersetzt man im Beispiel 1 das Chlornitroanilin durch die äquivalente Menge 2,4-Dinitroanilin (diazotiert in Schwefelsäure mit Nitrosylschwefelsäure), so erhält man den Farbstoff

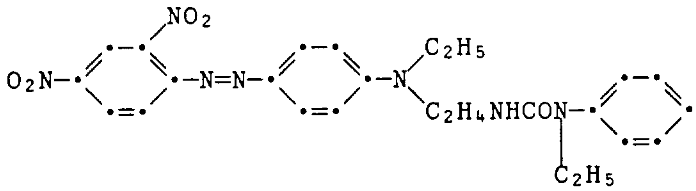

als grüne, metallisch glänzende Kristalle vom Smp. 167-168 °C. Der Farbstoff färbt Polyestermaterial in bordeaux-roten Nuancen.

Beispiel 4: In der im Beispiel 1 beschriebenen Weise erhält man bei Ersatz des Ethylanilins durch Methylanilin den Chlorethylharnstoff der Formel

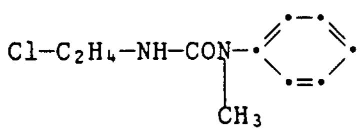

vom Schmelzpunkt 72-73 °C.

Aus der daraus wie beschrieben durch Umsetzung mit Ethylanilin hergestellten homologen Kupplungskomponente erhält man den Farbstoff der Formel

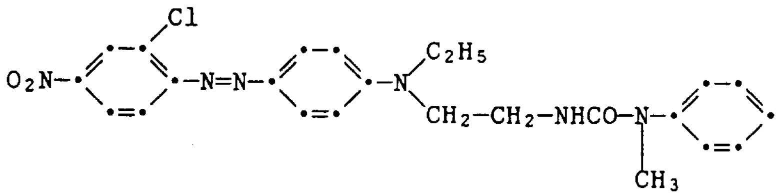

vom Smp. 196-198 °C (sintern bei 193 °). Der Farbstoff färbt Polyestermaterial in roten Nuancen.

Beispiel 5: In der im Beispiel 1 beschriebenen Weise erhält man bei Ersatz des Ethylanilins durch n-Butylanilin den Chlorethylharnstoff der Formel

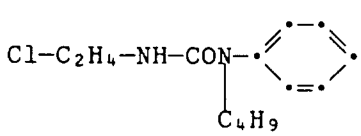

vom Schmelzpunkt 61-62 °C.

Aus der daraus wie beschrieben durch Umsetzung mit Ethylanilin hergestellten homologen Kupplungskomponente erhält man den Farbstoff

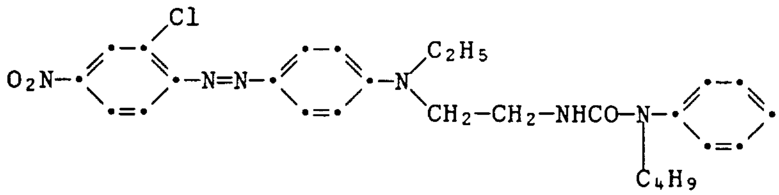

vom Smp. 155-156 °C. Der Farbstoff färbt Polyestermaterial in roten Nuancen.

Beispiel 6: Durch Umsetzung des im Beispiel 1 beschriebenen Chlorethylharnstoffs mit N-Ethyl-3-aminoacetanilid erhält man ein Gemisch des letzteren mit der Kupplungskomponente der Formel

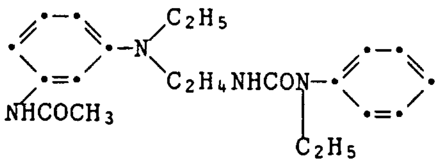

Man löst eine etwa 0,01 Mol entsprechende Menge dieser Mischung in 100 ml Schwefelsäure und versetzt sie tropfenweise innerhalb von 20 Minuten bei 0 bis 5 °C mit einer in üblicher Weise durch Diazotieren von 2,6 g 2,4-Dinitro-6-bromanilin mit Nitrosylschwefelsäure in Schwefelsäure hergestellten Diazoniumsalzlösung, lässt 2 Stunden nachrühren, nutscht, wäscht und trocknet das erhaltene Farbstoffgemisch (4,9 g) und gewinnt daraus durch zweimalige Säulenchromatographie an Kieselgel mit Ethylacetat als Eluiermittel 1,1 g des reinen Farbstoffes der Formel

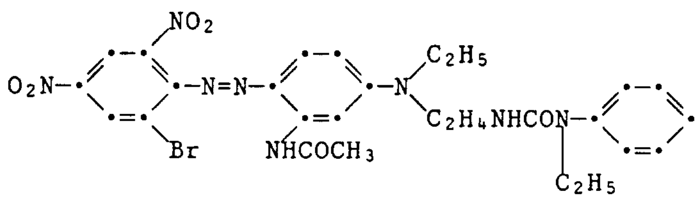

als grüne metallisch glänzende Kristalle vom Schmelzpunkt 187-188 °C. Der Farbstoff färbt Polyestermaterial in violett-blauen Nuancen.

Beispiel 7: Man arbeitet wie im Beispiel 6 beschrieben, verwendet jedoch die Kupplungskomponente der Formel

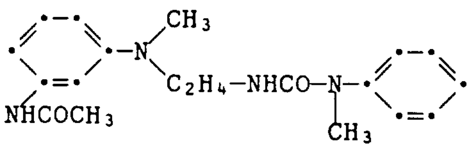

welche analog zu den Angaben im Beispiel 6 und Beispiel 1 hergestellt wird. Man erhält den Farbstoff der Formel

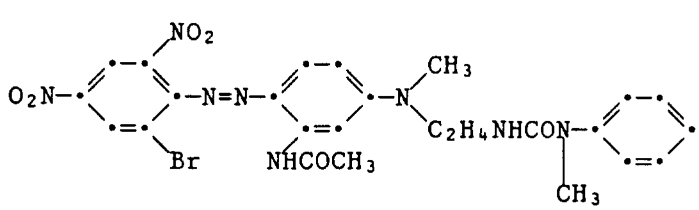

vom Schmelzpunkt 190-197 °C. Er färbt Textilmaterial aus Polyester in violett-blauen Nuancen.

Beispiel 8: Durch Umsetzung von 0,416 g des Farbstoffes von Beispiel 6 in 40 ml Diethylenglykolmonoethylether mit der äquivalenten Menge $CuNa(CN)_2$ während 30 Minuten bei 95-100 °C, Fällen mit Wasser, Nutschen, Waschen, Trocknen und anschliessende Säulenchromatographie erhält man ca. 0,7 g des blauen Farbstoffes der Formel

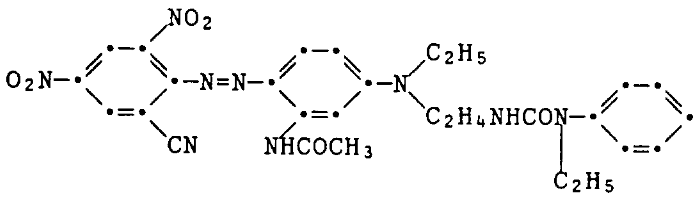

vom Schmelzpunkt 108-110 °C. Der Farbstoff färbt Polyestermaterial in blauen Nuancen.

Beispiel 9:

a) Ersetzt man im Beispiel 1 die Kupplungskomponente durch die äquivalente Menge der Verbindung der Formel

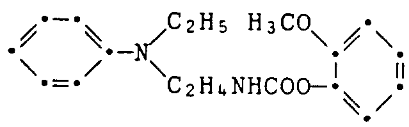

so erhält man in guter Ausbeute den Farbstoff der Formel

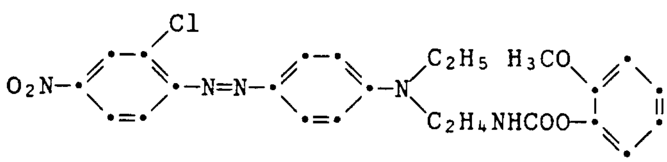

als rotbraunes Pulver vom Schmelzpunkt 160-162 °C. Der Farbstoff färbt Polyestermaterial in roten Nuancen.

b) Die Kupplungskomponente wird wie folgt hergestellt:

12,4 g Guajakol werden in Gegenwart von 0,1 g Diazabicyclooctan mit

10,6 g Chlorethylisocyanat umgesetzt. Man erhält in exothermer Reaktion

21,7 g des Chlorethylurethans der Formel

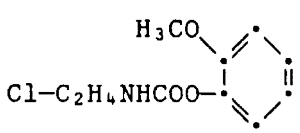

als beige, weiche Kristalle vom Smp. 68-71 °C.

4,60 g dieses Chlorethylurethans werden in Gegenwart von 35 mg Natriumiodid ohne Lösungsmittel mit 2,42 g N-Ethylanilin während 16 Stunden bei 100-105 °C umgesetzt. Man lässt auf 80 °C abkühlen, acyliert nicht umgesetztes Ethylanilin mit 0,3 ml Essigsäureanhydrid und verwendet die erhaltene rohe Kupplungskomponente ohne Reinigung.

Beispiel 10-12: Arbeitet man wie im Beispiel 9 beschrieben, setzt jedoch bei der Synthese der Kupplungskomponente anstelle von Guajakol äquivalente Mengen Phenol, 4-Methoxyphenol bzw. 4-Chlorphenol ein, so erhält man bei ansonsten gleicher Arbeitsweise die in der folgenden Tabelle aufgeführten Farbstoffe

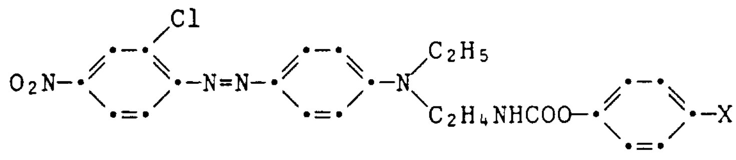

| Bsp. | X | Schmelzpunkt |
|---|---|---|
| 10 | H | 164-166 °C |
| 11 | $OCH_3$ | 164-166 °C (Sintern 162 °C) |
| 12 | Cl | 173-174 °C |

Beispiel 13: Zu einer trüben, bei Rückflusstemperatur gerührten Lösung von 2,0 g Trimethylenharnstoff und 2,4 g Triethylamin in 1000 ml Toluol wird innerhalb von 45 Minuten eine Lösung von 2,8 g 4-Nitrobenzoylchlorid in 20 ml Toluol getropft und 15 Minuten nachgerührt. Der weisse Niederschlag wird bei Raumtemperatur abgenutscht, mit Toluol, dann mit Wasser gewaschen und getrocknet. Die so erhaltenen 3,2 g des Mononitrobenzoylharnstoffs vom Schmelzpunkt 205 - 208 °C werden in 40 ml Dimethylformamid mit Hilfe von 0,32 g 5-prozentiger Palladiumkohle hydriert und liefern nach Umkristallisation aus Ethanol 1,1 g der Verbindung der Formel

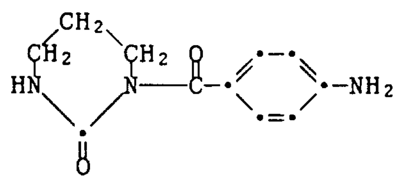

als weisses, bei 210 - 221 °C schmelzendes Pulver. Dieses wird mit 1,5 ml 30 prozentiger Chlorwasserstoffsäure in 50 ml Wasser gelöst und mit 1,25 ml 4N Natriumnitritlösung diazotiert. Die Diazoniumlösung lässt man zu einer auf pH 4 - 5 gestellten Lösung von 1,4 g 3-Diethylamino-4-methoxyacetanilid in 50 ml 1N Schwefelsäure tropfen. Nach zweistündigem Nachrühren, Nutschen, Waschen und Trocknen erhält man 0,96 g des Farbstoffes der Formel

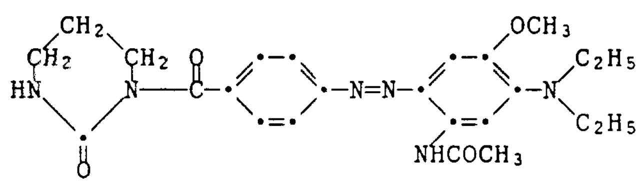

als rotes Pulver vom Smp. 186-187 °C. Der Farbstoff färbt Polyestermaterial in roten Nuancen.

Beispiel 14: Ersetzt man im Beispiel 13 die Kupplungskomponente durch die äquivalente Menge des entsprechenden Pyridons, so erhält man in sehr guter Ausbeute und Reinheit den gelben Farbstoff der Formel

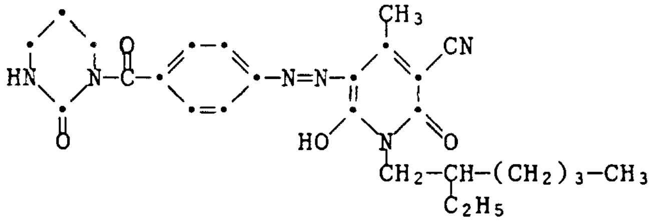

vom Schmelzpunkt 225-226 °C.

Beispiel 15: Man setzt 3,11 g der Kupplungskomponente von Beispiel 1 mit 1,4 g Tetracyanethylen in 7 ml Pyridin während 10 Minuten bei 55 ° C um. Dann kühlt man auf 5 ° C ab, gibt 14 ml Eisessig zu, giesst die Reaktionsmischung in 250 ml Eiswasser und nutscht den ausgefallenen Farbstoff ab. Nach Trocknung und anschliessender chromatographischer Reinigung an Kieselgel mit Chloroform als Eluiermittel erhält man 1,6 g des roten Farbstoffes der Formel

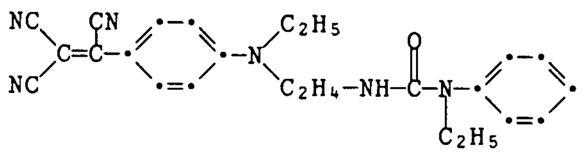

vom Schmelzpunkt 162 - 163 ° C.

Beispiel 16: Ersetzt man im Beispiel 1 die Diazokomponente durch die äquivalente Menge einer Mischung gleicher Teile 2-Amino-5,6-dichlorbenzothiazol und 2-Amino-4,5-dichlor-benzothiazol, so erhält man in ähnlicher Ausbeute eine Mischung der Farbstoffe

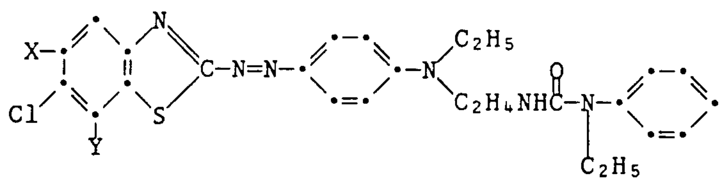

I X = H; Y = Cl
II X = Cl; Y = H

als grünbraunes Pulver vom Schmelzpunkt 100 - 102 ° C. Auf Textilmaterialien aus Polyester werden damit rote Färbungen erzielt.

Beispiel 17 und 18: Arbeitet man wie im Beispiel 16 beschrieben, setzt jedoch die aus den folgenden Formeln ersichtlichen Diazokomponenten ein, so erhält man die in der folgenden Tabelle aufgeführten Farbstoffe.

| Bsp. | Farbstoff | Schmelzpunkt |
|---|---|---|
| 17 | 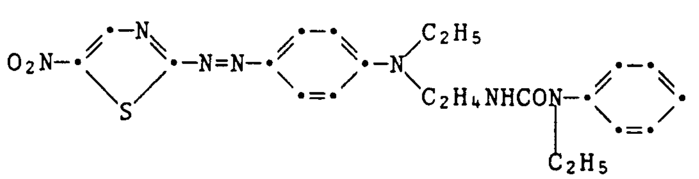 rotstichig blau | 170-172°C |
| 18 | 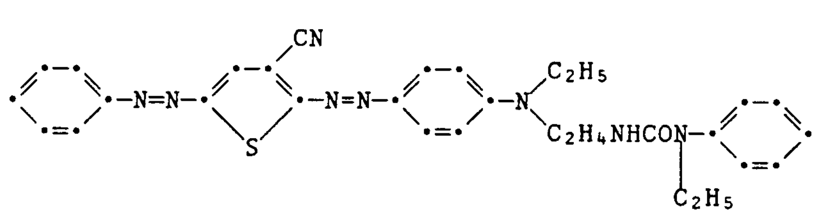 grünstichig dunkelblau | ca. 85°C |

Beispiel 19: Der Farbstoff vom Beispiel 4 wird durch Sandmahlung mit der doppelten Menge eines handelsüblichen Dispergators vom Typ Dinaphthylmethandisulfonat in bekannter Weise in eine 5-prozentige wässrige Dispersion übergeführt. Mit dieser Formulierung wird im HT-Verfahren bei 130 ° C in üblicher Weise eine bezüglich Farbstoff 1-prozentige Färbung auf Polyethylenterephthalatgewebe erstellt und reduktiv gereinigt. Das tiefrote Gewebe ist sehr gut reib- und waschecht.

Erhitzt man es aber zur Prüfung der Thermomigrationsechtheit 45 Sekunden auf 160 °C, so wird die Reibechtheit sehr schlecht und in üblichen Waschtests bei 60 °C werden von den Begleitgeweben vor allem Celluloseacetat und Polyamid sehr stark angeblutet. Dieses Bild wird noch erheblich verschlechtert, wenn das Gewebe vor dem Thermomigrationstest mit einem Textil-Weichmacher vom Typ Distearyl-diethylentriamin ausgerüstet wird.

Wird das gefärbte Gewebe dagegen vor der reduktiven Reinigung 60 Sekunden auf 220 °C erhitzt, so bleibt der Thermomigrationstest mit und ohne Weichmacher praktisch ohne Einfluss auf die Reib- und Waschechtheiten und aus dem Gewebe lassen sich mit siedendem Chloroform nur noch Spuren des ursprünglichen Farbstoffes extrahieren und ein grosser Teil des in der Faser befindlichen Farbstoffes widersteht selbst längeren Extraktionsversuchen mit Dimethylformamid.

Gleiche Resultate erhält man mit den Farbstoffen gemäss Beispiel 1, 5 und 9. Analoge Effekte zeigen auch die Farbstoffe gemäss Beispiel 3 (Bordo) und Beispiel 6 (Violettblau) sowie Beispiel 2 und 16 (Rot).

Beispiel 20: Eine auf übliche Weise mit dem Farbstoff gemäss Beispiel 13 durch Foulardieren und Thermofixieren bei 210 °C hergestellte starke scharlachrote Färbung erweist sich in den im Beispiel 19 beschriebenen Tests als ausgezeichnet thermomigrierecht.

Das gleiche gilt für den Farbstoff aus dem Beispiel 15, wenn die Thermofixierung bei 220 °C erfolgt.

Beispiel 21: In der im Beispiel 1 beschriebenen Weise erhält man bei Ersatz des Ethylanilins durch Anilin den Chlorethylharnstoff der Formel

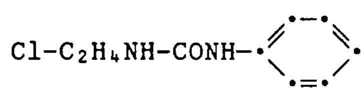

vom Schmelzpunkt 121-122 °C, der mit Ethylanilin in die Kupplungskomponente

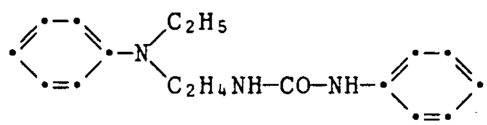

übergeführt wird, welche ohne Isolation analog Beispiel 1 in den roten Farbstoff der Formel

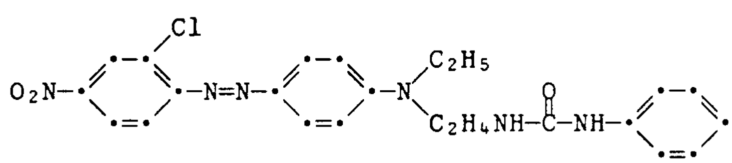

überführt wird.

Braunes Pulver vom Schmelzpunkt 195-196 °C.

Beispiel 22: Zu einer Lösung von 19,7 g (0,1 Mol) N-2-Aminoethyl-N-ethylanilin (hergestellt durch Hydrolyse von Phthalimidoethyl-ethylanilin in wässrigem Bromwasserstoff) in 1000 ml Essigsäure tropft man innerhalb von 15 Minuten bei 7-10 °C eine nach üblicher Methode hergestellte Diazoniumchloridlösung von 17,3 g (0,1 Mol) 2-Chlor-4-nitroanilin. Nach zweistündigem Nachrühren wird die violettrote Suspension abgenutscht, das Nutschgut in 400 ml Wasser aufgeschlämmt, mit 60 ml 30-prozentiger Natriumhydroxidlösung auf pH ca. 11 gestellt, abgenutscht, gewaschen und im Vakuumschrank getrocknet. Man erhält 27,6 g (79,3 % der berechneten Menge) des roten Farbstoffes der Formel

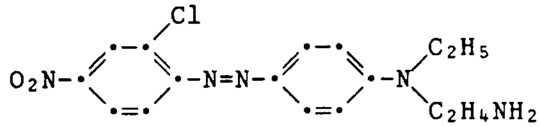

als graues Pulver vom Schmelzpunkt 133-134 °C.

17,4 g (0,05 Mol) dieses Aminoethylfarbstoffes werden in 200 ml Dichlormethan gelöst, mit 5,5 g Triethylamin (0,055 Mol) versetzt und innerhalb von 20 Minuten tropfenweise unter Einhaltung einer Maximaltemperatur von 25 °C mit einer Lösung des rohen Chlorameisensäureesters, hergestellt durch Phosgenierung von 0,055 Mol 2-Methylphenol in Toluol, (ca. 10 % Ueberschuss) versetzt. Nach einer halben Stunde wird die Reaktionslösung zuerst mit Wasser, dann mit verdünnter Salzsäure und schliesslich wieder mit Wasser ausgeschüttelt. Nach dem Eindampfen der Dichlormethanschicht, Waschen des Rückstandes mit Isopropanol und Trocknen erhält man 20,9 g (93,6 % d.Th.) des Farbstoffes der Formel

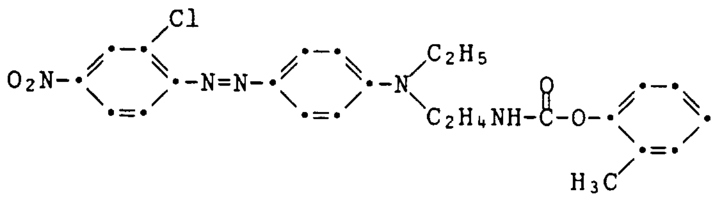

als braunes Pulver vom Schmelzpunkt 145-146 °C.

Beispiel 23: Ersetzt man im Beispiel 22 den Chlorameisensäureester von 2-Methylphenol durch eine äquivalente Menge des rohen Carbamylchlorids von Diisopropylamin, so erhält man unter sonst gleichen Bedingungen den Farbstoff der Formel

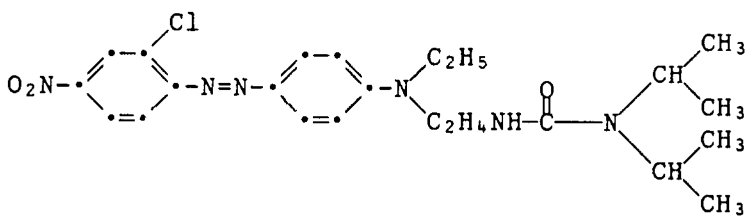

vom Schmelzpunkt 172-174 °C.

Beispiel 24: Ersetzt man im Beispiel 22 den Chlorameisensäureester von 2-Methylphenol durch eine äquivalente Menge des Carbamylchlorids von Diethylamin, so erhält man unter sonst gleichen Bedingungen den Farbstoff der Formel

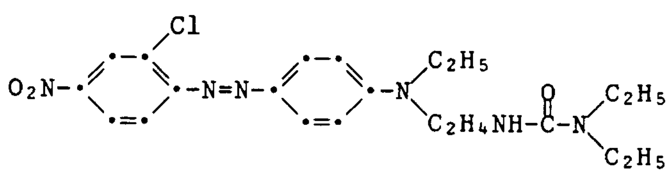

vom Schmelzpunkt 158-160 °C.

Beispiel 25: Ersetzt man im Beispiel 22 den Chlorameisensäureester von 2-Methylphenol durch eine äquivalente Menge Butylisocyanat, so erhält man unter sonst gleichen Bedingungen den Farbstoff der Formel

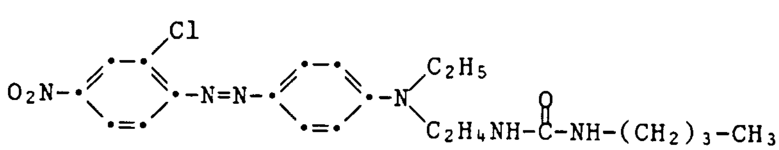

vom Schmelzpunkt 166-168 °C.

Beispiel 26: Auf analoge Art wie in Beispiel 25 erhält man auch den Farbstoff der Formel

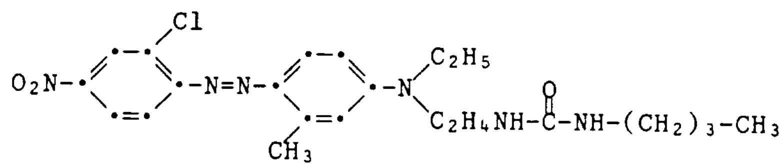

.

Beispiel 27: 21,5 g (0,093 Mol) 3-N-Cyanoethyl-N-ethyl-amino-acetanilid wird in 100 ml wasserfreiem Ethanol und 30 g flüssigem Ammoniak in Gegenwart von 4,3 g Raneynickel bei 70-75 °C unter einem Anfangsdruck von 150 Bar Wasserstoff hydriert. Nach 1,5-Stunden kommt die Wasserstoffaufnahme zum Stillstand. Man filtriert den Katalysator ab und dampft die Lösung ein, was 22,5 g (ungefähr die berechnete Menge) der rohen Verbindung der Formel

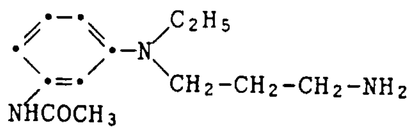

als hochviskoses braunes Oel ergibt.

5,7 g (ca. 0,024 Mol) dieser rohen Kupplungskomponente wird nun in 200 ml 2 N Schwefelsäure mit der aus 3,45 g (0,02 Mol) 2-Chlor-4-nitroanilin hergestellten Diazoniumchloridlösung während 2 Stunden bei 0-10 °C zur Reaktion gebracht. Dann wird der braune Farbstoff abfiltriert, mit 2 N Schwefelsäure gewaschen, in 200 ml Wasser aufgeschlämmt und mit Natriumhydroxid auf pH 10 gestellt. Erneutes Abnutschen, Waschen mit Wasser und Trocknen liefert 5,8 g (69 % d.Th.) als grünbraunes, chromatographisch uneinheitliches Pulver vom Schmelzpunkt 144-147 ° (Sintern bei 105 °C), welches hauptsächlich aus dem Farbstoff der Formel

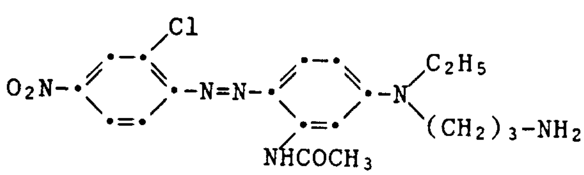

besteht.

2,1 g (0,05 Mol) davon werden in 20 ml Dichlormethan gelöst, mit 0,76 ml (ca. 10 % Ueberschuss) Triethylamin und dann innerhalb von 10 Minuten bei 22-25 °C mit dem rohen Chlorameisensäureester von 0,55 Mol 2-Methylphenol versetzt. Nach einstündigem Nachrühren ist das Ausgangsmaterial im Dünnschichtchromatogramm nicht mehr nachweisbar. Man reinigt das Gemisch durch Umkristallisation an Isopropanol und erhält so 2,0 g des Farbstoffes der Formel

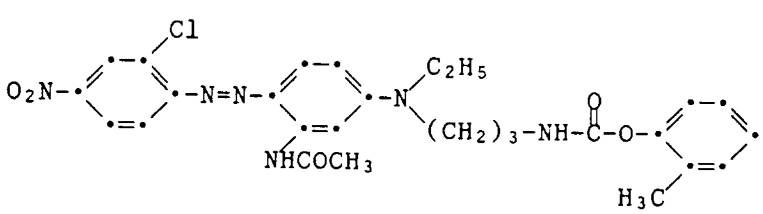

als braunes Pulver von Schmelzpunkt 167-168 °, dessen Kernresonanzspektrum die Struktur bestätigt.

Beispiel 28: 2,1 g des gemäss Beispiel 27 hergestellten Farbstoffes der Formel

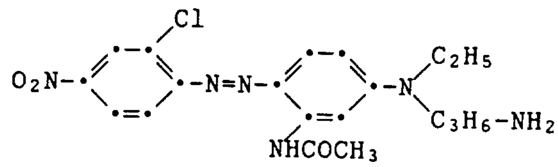

werden in 20 ml Dichlormethan bei -5 bis -8 °C tropfenweise mit 3 ml Cyclohexylisocyanat versetzt und anschliessend während 30 Minuten bei Rückflusstemperatur gerührt. Dann wird der auskristallisierte Farbstoff der Formel

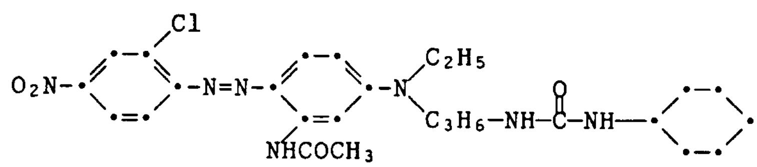

bei Raumtemperatur abgenutscht, mit Dichlormethan gewaschen und getrocknet. Schmelzpunkt 215-217 °C.

Beispiel 29 und 30:

Auf analoge Art wie im Beispiel 28 beschrieben erhält man durch Verwendung äquivalenter Mengen von Isopropylisocyanat bzw. n-Butylisocyanat anstelle von Cyclohexylisocyanat die Farbstoffe der Formel

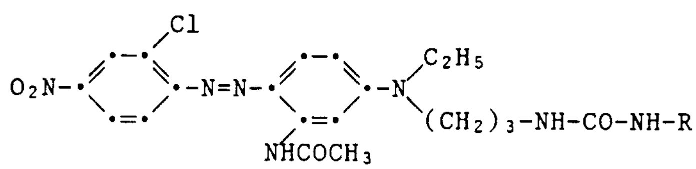

| Bsp. | R | Schmelzpunkt |
|---|---|---|
| 29 | 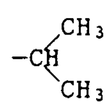 | 225-226°C |
| 30 | $-(CH_2)_3-CH_3$ | 210-211°C |

Beispiel 31 und 32:

Aus der in Beispiel 27 beschriebenen Kupplungskomponente der Formel

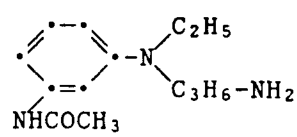

erhält man nach der im Beispiel 27 beschriebenen Arbeitsweise durch Umsetzung mit den entsprechenden Diazoniumsalzen und anschliessende Reaktion mit Chlorameisensäure-2-methyl-phenylestern bzw. n-Butylisocyanat die Farbstoffe der Formeln

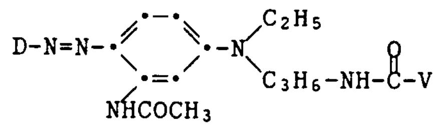

| Beispiel | D | V | Schmelzpunkt |
|---|---|---|---|
| 31 | 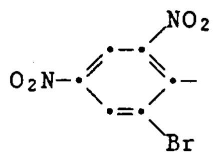 | 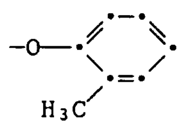 | 195-196°C |
| 32 | 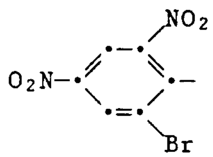 | $-NH-(CH_2)_3-CH_3$ | 157-158°C |

Beispiel 33:

1,2 g des Farbstoffes aus Beispiel 32 werden in 6 ml Pyridin und 1,3 ml Wasser mit 0,2 g CuCN während 3 Stunden bei 65-70 °C umgesetzt. Dann wird der entstandene Farbstoff mit Wasser gefällt, durch Umkristallisation aus Isopropanol vorgereinigt und schliesslich an einer Kieselgelsäule mit Ethylacetat als Eluiermittel weiter gereinigt. Man erhält den blauen Farbstoff der Formel

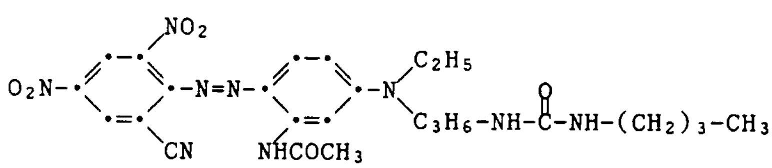

als braunes Pulver vom Schmelzpunkt 232-234 °C. Das Kernresonanzspektrum bestätigt diese Struktur.

Beispiel 34:

86 g des Cyanethylierungsproduktes der Formel

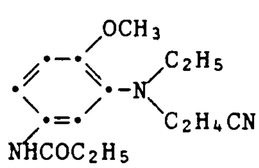

werden in 280 ml wasserfreiem Ethanol und 87 g flüssigem Ammoniak in Gegenwart von 12,6 g Raneynickel bei 70-75 °C unter einem Anfangsdruck von 150 Bar Wasserstoff hydriert. Nach 5 1/2 Stunden kommt die Wasserstoffaufnahme zum Stillstand. Man filtriert den Katalysator ab, dampft die Lösung ein und erhält 85 g eines zähen, gelbbraunen Rohproduktes. Von diesem werden 52 g in 500 ml 1-N HCl gelöst, mit Natriumhydroxid auf pH 6,5-7 gestellt und durch Ausschütteln mit Ethylacetat von Verunreinigungen befreit. Aus der wässrigen Phase lassen sich durch Ausschütteln mit Butanol bei pH 11,5 und Eindampfen der Butanolextrakte 33 g des Amins der Formel

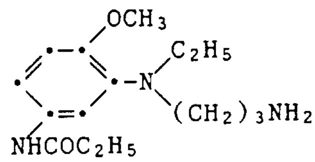

gewinnen.

6,2 g davon werden in 20 ml Ethanol gelöst und in 200 ml 1N Schwefelsäure eingetragen. Dann wird mit 30-prozentigem Natriumhydroxid auf pH 2-3 gestellt, innerhalb von 30 Minuten bei 0-5 ° C die Diazolösung aus 0,02 Mol 2-Brom-4,6-dinitroanilin zugegeben, wobei der pH-Wert von 2-3 mit Natriumhydroxid eingehalten wird. Man lässt 30 Minuten nachreagieren, stellt dann auf pH 11,5 und erhält nach Abnutschen, Waschen und Trocknen 8,3 g des Farbstoffes der Formel

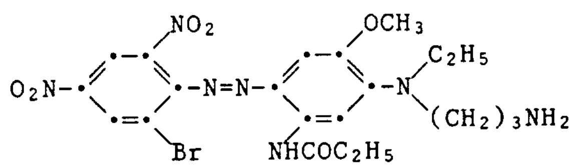

als graubraunes Pulver vom Schmelzpunkt 139-141 ° C.

2,8 g davon werden in 20 ml Dimethylformamid bei 0-5 ° C mit 2 ml Butylisocyanat versetzt. Nach Erwärmen auf Raumtemperatur wird mit 80 ml Wasser gefällt, abgenutscht, mit Wasser und Isopropanol gewaschen und getrocknet. Man erhält 2,5 g des blauen Farbstoffes der Formel

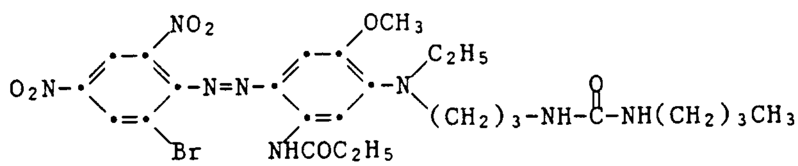

als braunes Pulver vom Schmelzpunkt 115-117 ° C. Die Struktur wird durch Kernresonanzspektroskopie bestätigt.

Beispiel 35:

20,0 g N,N'-Trimethylenharnstoff werden in 1000 ml Toluol bei Rückflusstemperatur teilweise gelöst und nach Zugabe von 20,2 g Triethylamin innerhalb von 90 Minuten tropfenweise mit einer Lösung von 25,4 g 3-Chlorpropionylchlorid versetzt. Man rührt 30 Minuten nach, kühlt dann auf 5 ° C ab, filtriert von Ungelöstem ab und dampft das Filtrat im Vakuum ein. Man erhält 24 g Chlorpropionylharnstoff der Formel

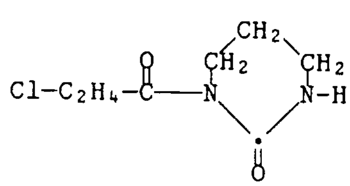

als beiges Pulver.

5,71 g davon werden in 30 ml Isopropanol in Gegenwart von 0,30 g Natriumiodid und 3,18 g Natriumcarbonatpulver mit 7,26 g N-Ethylanilin während 17 Stunden bei Rückflusstemperatur umgesetzt. Nach Filtration des Gemisches und Entfernung des Lösungsmittels und des überschüssigen Ethylanilins durch Vakuumdestillation erhält man 7,1 g der Kupplungskomponente der Formel

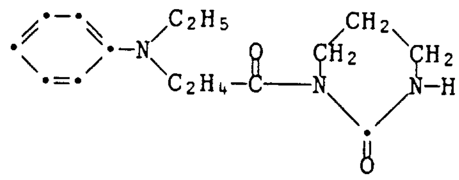

als viskoses Oel.

Durch Kuppeln mit diazotiertem 2-Chlor-4-Nitroanilin in Essigsäure erhält man daraus den rohen Farbstoff der Formel

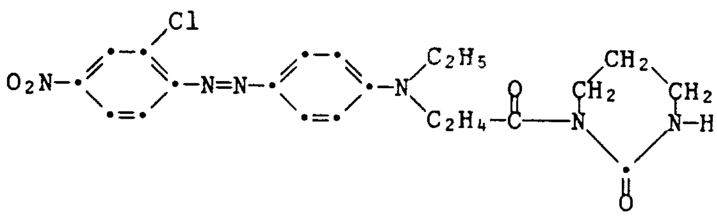

,

der nach chromatographischer Reinigung an Kieselgel mit Ethylacetat als Eluiermittel bei 197-199 °C schmilzt und dessen Protonenresonanzspektrum in Dimethylsulfoxid die obige Struktur bestätigt.

Beispiele 36-47:

Auf analoge Art wie in den Beispielen 22-32 beschrieben werden die in der folgenden Tabelle aufgeführten Farbstoffe hergestellt, indem man einen Farbstoff, enthaltend eine Aminoalkylengruppe mit einem Chlorameisensäureester, einem Carbamylchlorid eines Amins oder einem Isocyanat umsetzt.

| Bsp. | Farbstoff | Nuance auf Polyester |
|---|---|---|
| 36 | 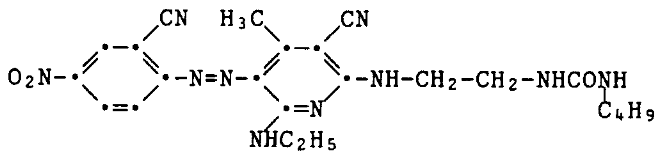 | Rot |
| 37 | 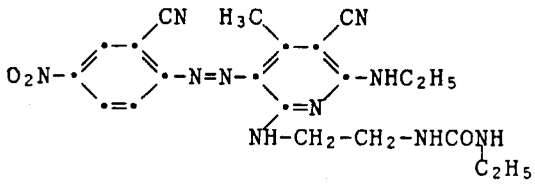 | Rot |
| 38 | 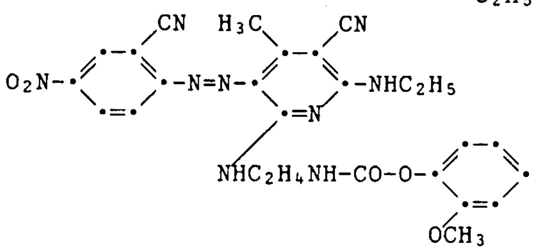 | Rot |
| 39 | 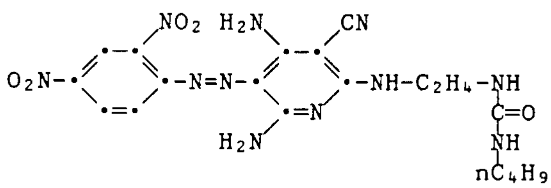 | Rot |
| 40 | 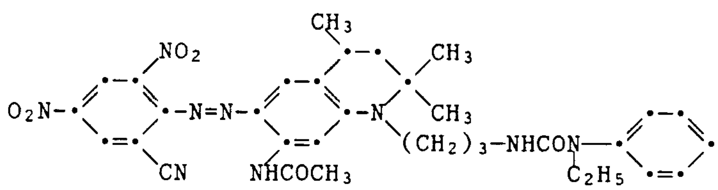 | Blau |
| 41 | 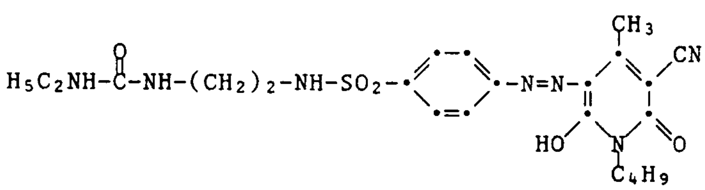 | Gelb |
| 42 | 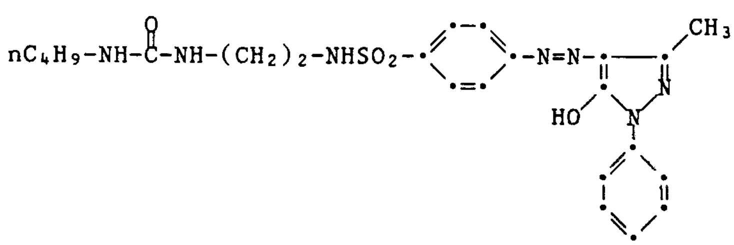 | Gelb |

| Bsp. | Farbstoff | Nuance auf Polyester |
|---|---|---|
| 43 | 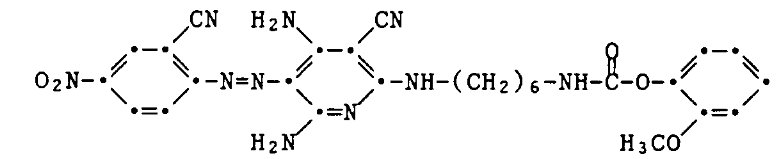 | Rot |
| 44 | 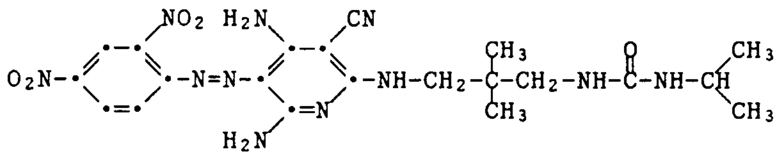 | Rot |
| 45 | 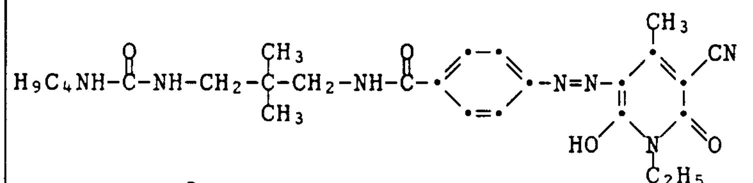 | Gelb |
| 46 | 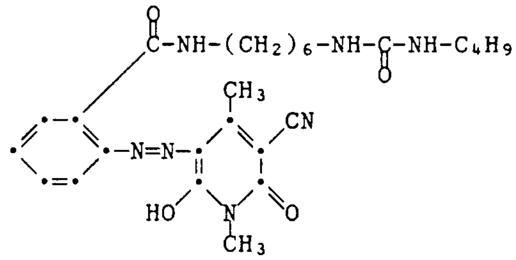 | Gelb |
| 47 | 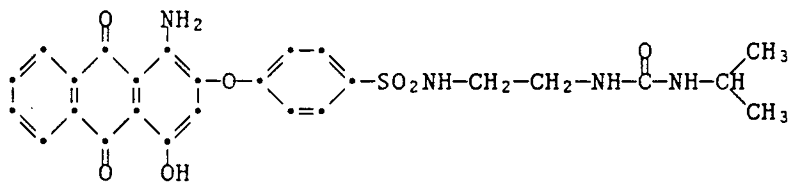 | Blaust.Rot |

Beispiel 48:

Eine auf übliche Weise aus 6,9 g 2-Chlor-4-nitro-anilin hergestellte Diazoniumchloridlösung wird innerhalb von 30 Minuten bei 0-5°C in eine Lösung von 11,7 g der Kupplungskomponente der Formel

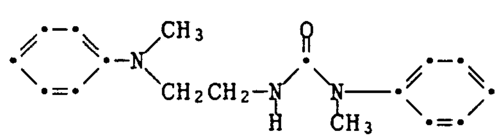

in 100 ml Eisessig getropft. Nach zweistündigem Nachrühren bei 0-5°C werden 400 ml Eiswasser zugegeben. Nach Abnutschen, Waschen und Trocknen erhält man 13,3 g Farbstoff der Formel

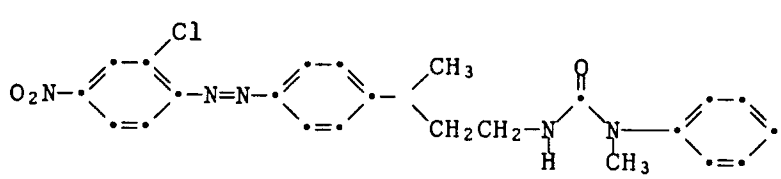

als schwarzes Pulver vom Schmelzpunkt 188-192 ° C. Der Farbstoff färbt Polyestermaterial in roten Farbtönen.

Die verwendete Kupplungskomponente wird wie folgt hergestellt:
26,8 g N-Methylanilin in 120 ml Toluol werden bei 20 ° C gerührt und tropfenweise mit 26,4 g Chlorethylisocyanat versetzt. Nach zweistündigem Nachrühren, Abnutschen, Waschen und Trocknen erhält man 11,7 g Chlorethylharnstoff der Formel

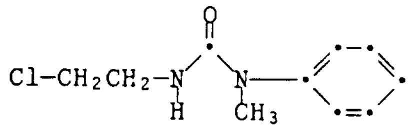

als weisse Kristalle vom Smp. 72-73 ° C. Nach Aufkonzentrieren der Mutterlauge und Abnutschen werden weitere 24,6 g dieser Substanz gewonnen.

10,6 g Chlorethylharnstoff, 5,7 g N-Methylanilin, 0,8 g Kaliumjodid und 7,2 g Kaliumcarbonat werden 20 Stunden in 50 ml Toluol unter Rückfluss erhitzt. Nach Abkühlen und Zusetzen von 8 g Bernsteinsäureanhydrid wird über Nacht bei 20 ° C gerührt. Danach wird das Gemisch mit je 30 ml 1 M Natriumhydrogencarbonat-Lösung und Wasser extrahiert. Das Einengen der organischen Phase ergibt 12 g Kupplungskomponente als zähflüssiges Oel. Nach Zusetzen von 25 ml tert.-Butyl-methyl-ether, Stehenlassen, Dekantieren und Trocknen erhält man 4,7 g der Kupplungskomponente als weisse Kristalle vom Schmelzpunkt 89-90 ° C.

Beispiel 49:
Analog zu Beispiel 48 erhält man einen Farbstoff der Formel

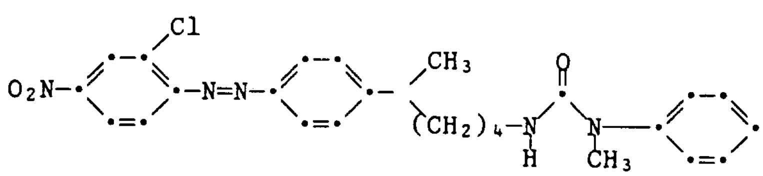

als schwarzes Pulver vom Schmelzpunkt 122-124 ° C, wenn als Kupplungskomponente eine Substanz der Formel

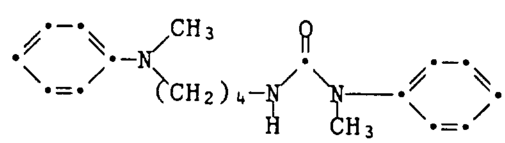

eingesetzt wird. Der Farbstoff färbt Polyestermaterial in roten Farbtönen.

Zur Herstellung der Kupplungskomponente werden 7,1 g Brombutylisocyanat zugetropft zu 8,6 g N-Methylanilin und 5 g Natriumcarbonat in 30 ml Dimethylformamid. Nach 6 Stunden Rühren bei 80 ° C werden 2 g Bernsteinsäureanhydrid zugegeben. Die Lösung wird auf 100 ml Eisessig ausgegossen und telquel zum Kuppeln eingesetzt.

Beispiel 50:
Eine auf übliche Weise aus 5,5 g 4-Nitroanilin hergestellte Diazoniumsalzlösung wird bei 0-5 ° C zugetropft zu einer Lösung der Kupplungskomponente der Formel

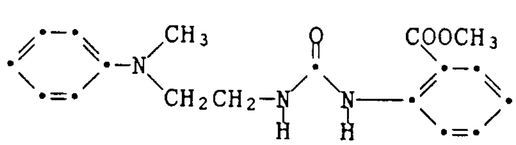

in 200 ml Eisessig. Nach zweistündigem Nachrühren werden 400 ml Wasser zugegeben. Abnutschen, Waschen und Trocknen ergibt 5,3 g Rohprodukt, welches zur Reinigung dreimal aus je 15 ml heissem tert.-Butyl-methyl-ether umgefällt wird. Man erhält 1,9 g reinen Farbstoff der Formel

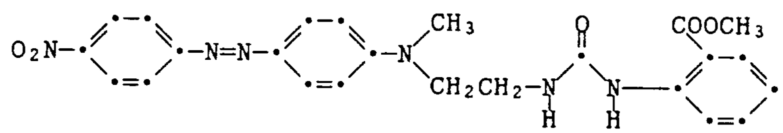

als dunkelrotes Pulver vom Schmelzpunkt 160-161 °C. Der Farbstoff färbt Polyestermaterial in roten Farbtönen.

Die verwendete Kupplungskomponente wird wie folgt hergestellt:

Zu 9,1 g Anthranilsäuremethylester in 50 ml Toluol werden 6,2 g Chlorethylisocyanat zugetropft. Nach zweistündigem Nachrühren bei Raumtemperatur werden 6,4 g N-Methylanilin, 8,3 g Kaliumcarbonat und 0,5 g Kaliumiodid zugegeben. Nach achtstündigem Erhitzen unter Rückfluss werden die unlöslichen Salze abgenutscht. Das Filtrat wird ausgeschüttelt mit 1 M Salzsäurelösung, 1 M Natriumbicarbonatlösung und mit Wasser. Abdestillieren des Lösungsmittels ergibt 12,7 g rohe Kupplungskomponente als gelbliches Oel. Das Rohprodukt wird telquel zum Kuppeln eingesetzt.

Beispiel 51:

0,7 g des Natriumsalzes von 1,4-Diamino-3-cyan-2-tetrazolyl-anthrachinon und 0,1 g Kaliumiodid werden in 5 ml Dimethylformamid suspendiert. Bei 80 °C wird eine Lösung von 0,5 g des im Beispiel 48 beschriebenen Chlorethylharnstoffs in 5 ml Dimethylformamid innert 10 Minuten zugetropft. Nach 6 Stunden Rühren bei 80 °C wird der Farbstoff durch Zugabe von 50 ml Methanol bei 0-5 °C ausgefällt. Nach Abnutschen, Waschen und Trocknen erhält man 0,8 g Substanz der Formel

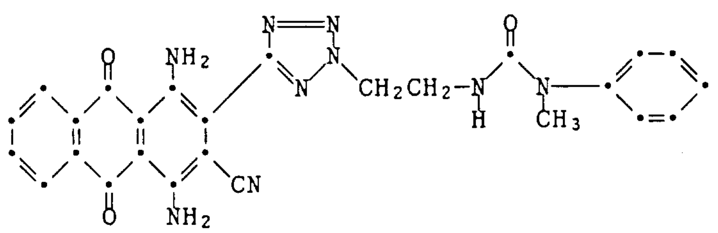

als dunkelblaues Pulver vom Schmelzpunkt 129-130 °C. Der Farbstoff färbt Polyestermaterial in blauen Farbtönen.

Beispiel 52:

Zu 18 g Toluylen-2,4-diisocyanat in 50 ml Toluol werden bei 0-5 °C 11,1 g N-Methylanilin zugetropft. Nach 2 Stunden Rühren bei 0-5 °C wird das Lösungsmittel abdestilliert. Man erhält 61,5 g rohes Monoisocyanat der Formel

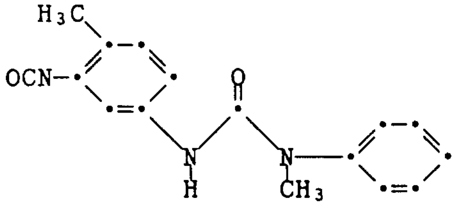

als gelbliches Oel mit einem Isocyanattiter von 6,9 %. Nach mehrtägigem Stehenlassen bilden sich weisse Kristalle vom Schmelzpunkt 81-82 °C.

5,9 g des Farbstoffs der Formel

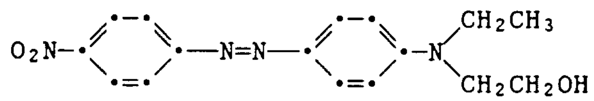

in 50 ml Dimethylformamid werden mit 12,7 g des oben beschriebenen Monoisocyanats (Rohprodukt) und 0,2 g Diazabicyclooctan versetzt. Nach 8 Stunden Rühren bei 80 °C wird abgekühlt und auf 700 ml Eiswasser ausgegossen. Durch Extrahieren mit 150 ml Methylenchlorid und nachfolgendes Waschen und Einengen der organischen Phase erhält man 10,1 g eines schwarzen, amorphen Rückstands, welcher den Farbstoff der Formel

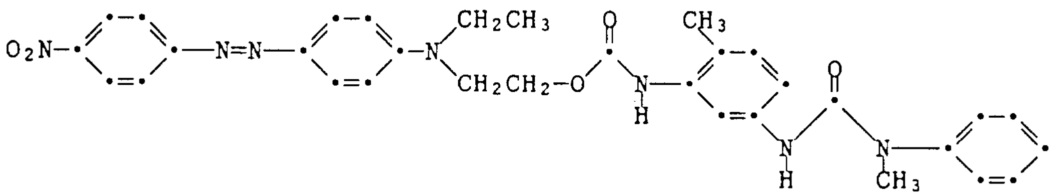

als Hauptprodukt enthält. Nach Umkristallisieren aus Methanol erhält man 0,95 g rote Kristalle vom Schmelzpunkt 95-98 °C. Der Farbstoff färbt Polyestermaterial in roten Farbtönen.

Beispiel 53:

Eine auf übliche Weise aus 1,4 g 4-Nitroanilin hergestellte Diazoniumchloridlösung wird bei 0-5 °C zugetropft zu einer Lösung von 4,5 g Kupplungskomponente der Formel

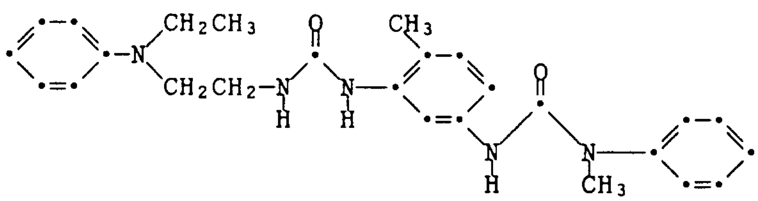

in 20 ml Eisessig. Nach zweistündigem Nachrühren werden 150 ml Eiswasser zugesetzt. Abnutschen, Waschen und Trocknen ergibt 4,5 g Farbstoff der Formel

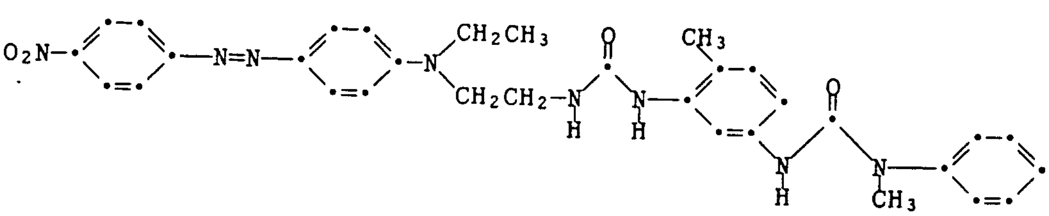

als schwarzes Pulver. Umkristallisieren aus Methanol ergibt rote Kristalle vom Schmelzpunkt 147-152 °C. Der Farbstoff färbt Polyestermaterial in braunroten Farbtönen.

Die Kupplungskomponente wird wie folgt hergestellt:

Zu 20 g des im Beispiel 52 beschriebenen Monoisocyanats in 20 ml Toluol werden 4,9 g N-($\beta$-Aminoethyl)-N-ethyl-anilin portionenweise zugegeben. Nach zweistündigem Nachrühren, Abnutschen, Waschen und Trocknen erhält man 10,5 g Kupplungskomponente als gelbliches Pulver vom Schmelzpunkt 104-110 °C.

Beispiel 54-59:

Auf analoge Art wie in den Beispielen 52 und 53 beschrieben werden die in der folgenden Tabelle

aufgeführten Farbstoffe hergestellt, indem man die entsprechenden Diisocyanate, Amine und Hydroxyethyl- bzw. β-Aminoethylsubstituierten Farbstoffe oder Kupplungs- und Diazokomponenten einsetzt.

| Bsp. | Farbstoff | Nuance auf Polyester |
|---|---|---|
| 54 | 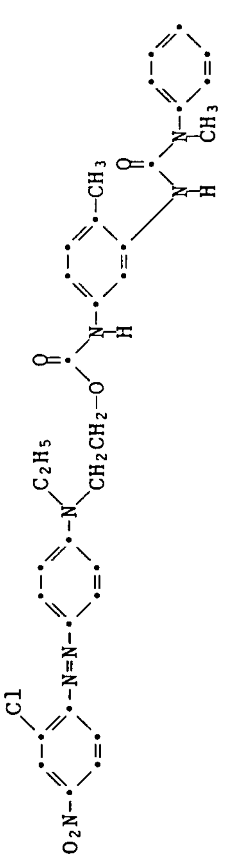 | rot |
| 55 | 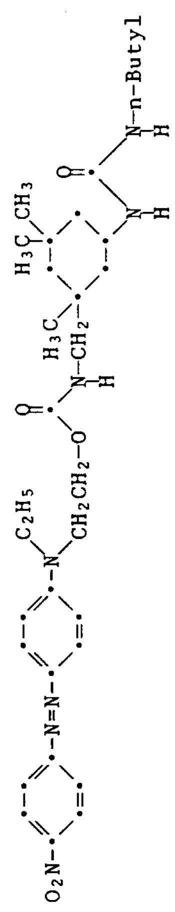 | rot |
| 56 | 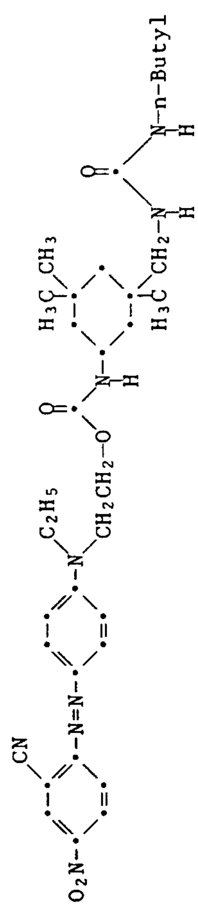 | violett |
| 57 | 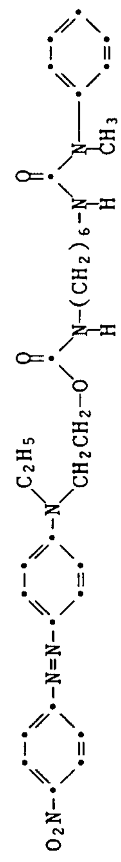 | rot |

| Bsp. | Farbstoff | Nuance auf Polyester |
|---|---|---|
| 58 | 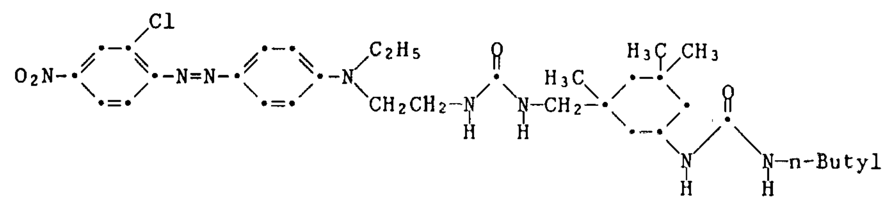 | rot |
| 59 | 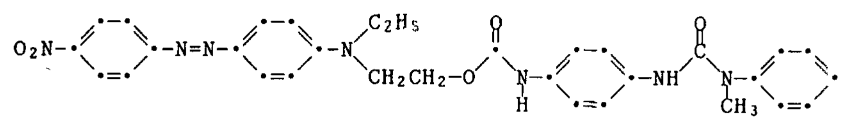 | rot |

Beispiele 60-111:

Auf analoge Art wie in den Beispielen 1-12 und 22-32 beschrieben werden die in der folgenden Tabelle aufgeführten Farbstoffe hergestellt.

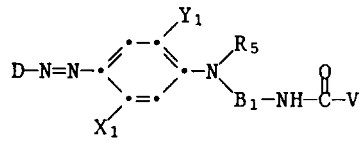

| Bsp. | D | $X_1$ | $Y_1$ | $B_1$ | V | $R_5$ | Nuance auf Polyester |
|---|---|---|---|---|---|---|---|
| 60 | 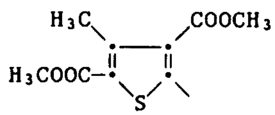 | $-NH-\overset{O}{\overset{\|}{C}}-CH_3$ | H | $-(CH_2)_3-$ | -NH-n-Butyl | $C_2H_5$ | Rotviolett |
| 61 | 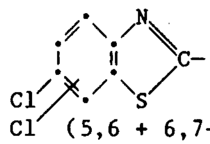 (5,6 + 6,7-Dichlor) | $-NH-\overset{O}{\overset{\|}{C}}-CH_3$ | H | $-(CH_2)_3-$ | -NH-n-Butyl | $C_2H_5$ | Rubinrot |
| 62 | 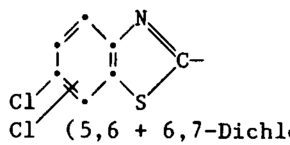 (5,6 + 6,7-Dichlor) | $-NH-\overset{O}{\overset{\|}{C}}-C_2H_5$ | H | $-(CH_2)_3-$ | -NH-n-Butyl | $C_2H_5$ | Rubinrot |
| 63 | 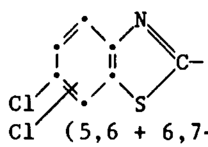 (5,6 + 6,7-Dichlor) | $-NH-\overset{O}{\overset{\|}{C}}-C_2H_5$ | H | $-(CH_2)_3-$ | -NH-i-Propyl | $C_2H_5$ | Rubinrot |

| Bsp. | D | $X_1$ | $Y_1$ | $B_1$ | V | $R_5$ | Nuance auf Polyester |
|---|---|---|---|---|---|---|---|
| 64 | 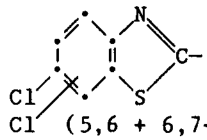 (5,6 + 6,7-Dichlor) | 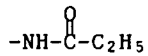 | H | $-(CH_2)_2-$ | $-NH-C_2H_5$ | $C_2H_5$ | Rubinrot |
| 65 | 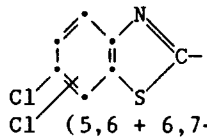 (5,6 + 6,7-Dichlor) | 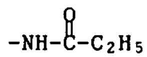 | H | $-(CH_2)_2-$ | -NH-n-Butyl | $C_2H_5$ | Rubinrot |
| 66 | 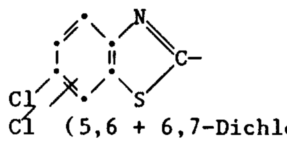 (5,6 + 6,7-Dichlor) | 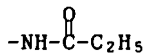 | H | $-(CH_2)_3-$ | 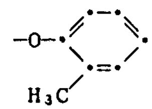 | $C_2H_5$ | Rubinrot |
| 67 | 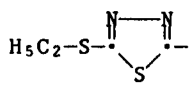 | $-NHCOCH_3$ | H | $-(CH_2)_3-$ | 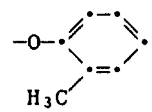 | $C_2H_5$ | Rot |
| 68 | 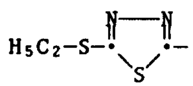 | $-NHCOCH_3$ | H | $-(CH_2)_3-$ | -NH-i-Propyl | $C_2H_5$ | Rot |
| 69 | 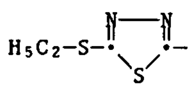 | $-NHCOC_2H_5$ | H | $-(CH_2)_3-$ | $-NH-C_2H_5$ | $C_2H_5$ | Rot |
| 70 | 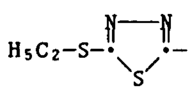 | $-NHCOC_2H_5$ | H | $-(CH_2)_3-$ | $-NH-C_2H_5$ | $CH_3$ | Rot |

| Bsp. | D | $X_1$ | $Y_1$ | $B_1$ | V | $R_5$ | Nuance auf Polyester |
|---|---|---|---|---|---|---|---|
| 71 | 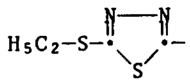 | $-NHCOC_2H_5$ | H | $-(CH_2)_3-$ | $-NH-C_2H_5$ | n-Propyl | Rot |
| 72 | 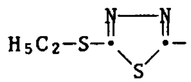 | $-NHCOC_2H_5$ | H | $-(CH_2)_3-$ | $-NH-C_2H_5$ | n-Butyl | Rot |
| 73 | 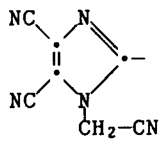 | $CH_3$ | H | $-(CH_2)_3-$ | 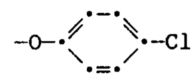 | n-Butyl | Rot |
| 74 | 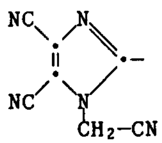 | $CH_3$ | H | $-(CH_2)_3-$ | 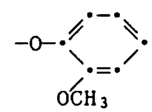 | n-Butyl | Rot |
| 75 | 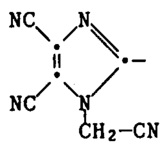 | $CH_3$ | H | $-(CH_2)_3-$ | 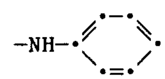 | n-Butyl | Rot |
| 76 | 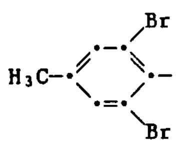 | $-NHCOCH_3$ | H | $-(CH_2)_3-$ | -NH-n-Butyl | $C_2H_5$ | Gelb |

| Bsp. | D | $X_1$ | $Y_1$ | $B_1$ | V | $R_5$ | Nuance auf Polyester |
|---|---|---|---|---|---|---|---|
| 77 | 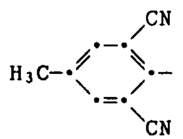 | $-NHCOCH_3$ | H | $-(CH_2)_3-$ | -NH-i-Propyl | $C_2H_5$ | Rot |
| 78 | 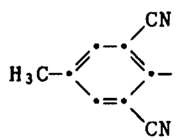 | $-NH-SO_2CH_3$ | H | $-(CH_2)_3-$ | -NH-n-Butyl | n-Butyl | Rot |
| 79 | 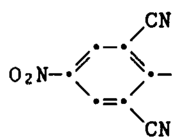 | $-CH_3$ | H | $-(CH_2)_3-$ | -NH-n-Butyl | $C_2H_5$ | Rotst.-Blau |
| 80 | 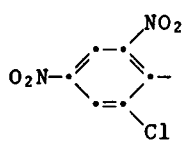 | $-CH_3$ | $-OCH_3$ | $-(CH_2)_3-$ | -NH-n-Butyl | $C_2H_5$ | Blau |
| 81 | 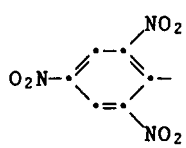 | $-NHCOCH_3$ | H | $-(CH_2)_3-$ | -NH-n-Butyl | $C_2H_5$ | Blau |

| Bsp. | D | $X_1$ | $Y_1$ | $B_1$ | V | $R_5$ | Nuance auf Polyester |
|---|---|---|---|---|---|---|---|
| 82 | 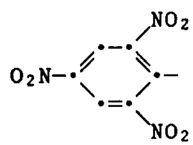 | $-NHCOCH_3$ | $-OCH_3$ | $-(CH_2)_3-$ | -NH-n-Butyl | $C_2H_5$ | Grünblau |
| 83 | 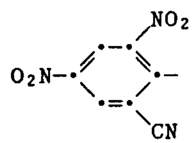 | $-NHCOCH_3$ | H | $-(CH_2)_3-$ | -NH-Butyl | $C_2H_5$ | Blau |
| 84 | 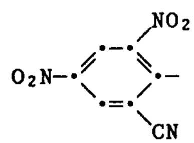 | $-NHCOCH_3$ | $-OCH_3$ | $-(CH_2)_3-$ | -NH-Butyl | $C_2H_5$ | Grünblau |
| 85 | 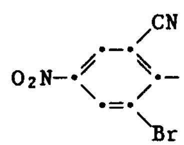 | $-NHCOCH_3$ | H | $-(CH_2)_3-$ | -NH-Butyl | $C_2H_5$ | Rotst.-Blau |
| 86 | 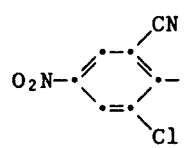 | $-NH-COC_2H_5$ | H | $-(CH_2)_3-$ | -NH-Butyl | $C_2H_5$ | Rotst.-Blau |

| Bsp. | D | $X_1$ | $Y_1$ | $B_1$ | V | $R_5$ | Nuance auf Polyester |
|---|---|---|---|---|---|---|---|
| 87 | 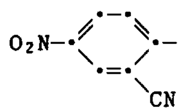 | $-NH-COC_2H_5$ | H | $-(CH_2)_3-$ | -NH-i-Propyl | $CH_3$ | Rubinrot |
| 88 | 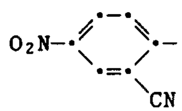 | $-NHCOCH_3$ | H | $-(CH_2)_2-$ | $-NH-C_2H_5$ | $C_2H_5$ | Rubinrot |
| 89 | 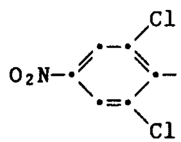 | Cl | H | $-(CH_2)_3-$ | -NH-Butyl | $C_2H_5$ | Gelbbraun |
| 90 | 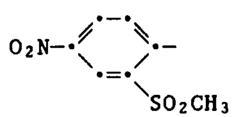 | H | H | $-(CH_2)_3-$ | -NH-Butyl | $C_2H_5$ | Rubinrot |
| 91 | 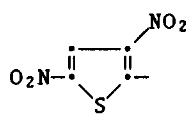 | $-NHCOCH_3$ | H | $-(CH_2)_3-$ | -NH-Butyl | $C_2H_5$ | Grün |
| 92 | 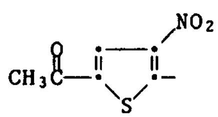 | $-NHCOCH_3$ | H | $-(CH_2)_3-$ | -NH-Butyl | $C_2H_5$ | Blau |

| Bsp. | D | $X_1$ | $Y_1$ | $B_1$ | V | $R_5$ | Nuance auf Polyester |
|---|---|---|---|---|---|---|---|
| 93 | 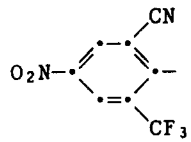 | $-NHCOCH_3$ | $OCH_3$ | $-(CH_2)_3-$ | -NH-Butyl | $C_2H_5$ | Blau |
| 94 | 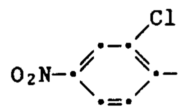 | H | H | $-(CH_2)_3-$ | -NH-Butyl | $C_2H_5$ | Rot |
| 95 | 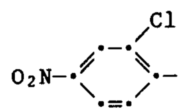 | H | H | $-(CH_2)_4-$ | 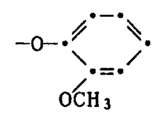 | $C_2H_5$ | Rot |
| 96 | 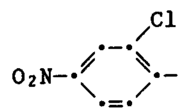 | H | H | $-(CH_2)_4-$ | -NH-Butyl | $C_2H_5$ | Rot |
| 97 | 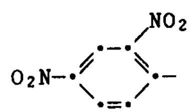 | H | H | $-(CH_2)_4-$ | -NH-Butyl | $C_2H_5$ | Rubinrot |
| 98 | 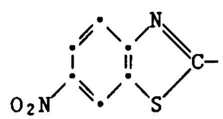 | H | H | $-(CH_2)_4-$ | -NH-Butyl | $C_2H_5$ | Rot |

| Bsp. | D | $X_1$ | $Y_1$ | $B_1$ | V | $R_5$ | Nuance auf Polyester |
|---|---|---|---|---|---|---|---|
| 99 | 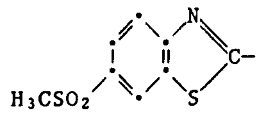 | H | H | $-(CH_2)_2-$ | 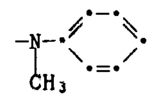 | $C_2H_5$ | Rot |
| 100 | 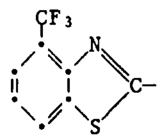 | $CH_3$ | $CH_3$ | $-(CH_2)_2-$ | 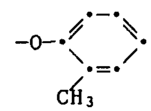 | $C_2H_5$ | Rot |
| 101 | 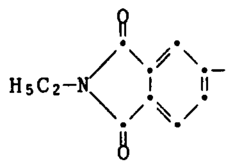 | $-NHCOCH_3$ | H | $-(CH_2)_2-$ | 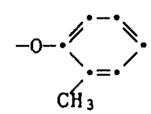 | $C_2H_5$ | Rot |
| 102 | 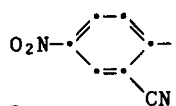 | $-NHCOCH_3$ | H | $-(CH_2)_2-$ | 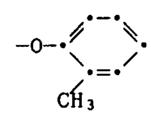 | $C_2H_5$ | Violett |
| 103 | 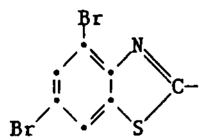 | $CH_3$ | H | $-(CH_2)_2-$ | 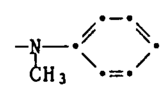 | $C_2H_5$ | Rot |
| 104 | 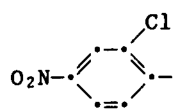 | $-NHCOCH_3$ | H | $-(CH_2)_3-$ | 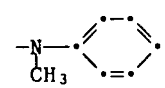 | $-C_2H_4CN$ | Rot |

| Bsp. | D | $X_1$ | $Y_1$ | $B_1$ | V | $R_5$ | Nuance auf Polyester |
|---|---|---|---|---|---|---|---|
| 105 | 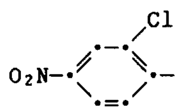 | $-NHCOCH_3$ | H | $-(CH_2)_3-$ | 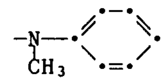 | $-C_2H_4OH$ | Rot |
| 106 | 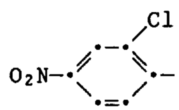 | $-NHCOCH_3$ | H | $-(CH_2)_3-$ | 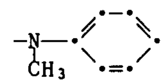 | 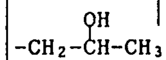 | Rot |
| 107 | 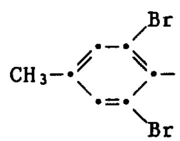 | H | H | $-(CH_2)_2-$ | 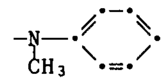 | $CH_3$ | Gelb |
| 108 | 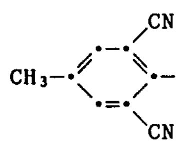 | H | H | $-(CH_2)_2-$ | 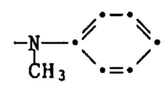 | $CH_3$ | Rot |
| 109 | 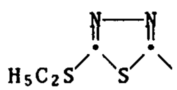 | H | H | $-(CH_2)_2-$ | 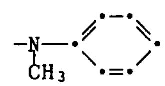 | $CH_3$ | Rot |
| 110 | 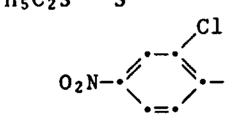 | H | H | $-(CH_2)_2-$ | 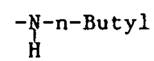 | $CH_3$ | Rot |
| 111 | 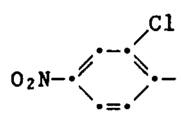 | H | H | $-(CH_2)_2-$ | 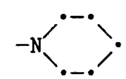 | $CH_3$ | Rot |

## Patentansprüche

**1.** Dispersionsfarbstoffe der Formel

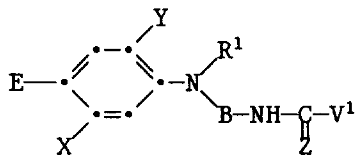

(1)

worin

E D-N = N- oder

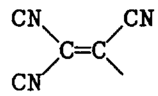

bedeutet, wobei D der Rest einer carbocyclischen oder heterocyclischen Diazokomponente mit Ausnahme von Aminobenzisothiazol ist,

X Wasserstoff, $C_1$-$C_4$-Alkyl, $C_1$-$C_4$-Alkoxy, Acylamino, Halogen, $C_1$-$C_4$-Alkylsulfonylamino oder eine Gruppe der Formel -NH-CO-NHQ, worin Q Wasserstoff, $C_1$-$C_4$-Alkyl oder Phenyl ist,

Y Wasserstoff, Halogen, $C_1$-$C_4$-Alkyl, $C_1$-$C_4$-Alkoxy, $C_1$-$C_4$-Alkoxy-$C_1$-$C_4$-alkyl oder $C_1$-$C_4$-Alkoxy-$C_2$-$C_4$-alkoxy,

$R^1$ $C_1$-$C_{12}$-Alkyl, $C_2$-$C_6$-Alkenyl oder Phenyl, oder Y und $R^1$, zusammen mit dem Stickstoffatom und den beiden sie verbindenden C-Atomen, einen 5- oder 6-gliedrigen Ring bilden,

B einen geradkettigen oder verzweigten $C_2$-$C_6$-Alkylenrest,

Z O oder S und

$V^1$ einen Rest

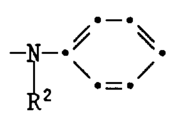 , 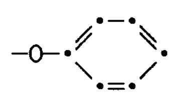 ,

$-NHR^6$ ,

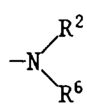 oder 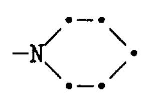

bedeutet, welcher im Phenylring ggf. substituiert ist durch $C_1$-$C_4$-Alkyl oder -Alkoxy, $C_1$-$C_4$-Alkoxycarbonyl oder Halogen, wobei

$R^2$ $C_1$-$C_6$-Alkyl und

$R^6$ $C_1$-$C_6$-Alkyl oder $C_5$-$C_7$-Cycloalkyl bedeutet, wobei in den Azofarbstoffen die Diazokomponente D kein gegebenenfalls substituiertes Aminobenzisothiazol ist und wobei die Kupplungskomponente kein N-($\beta$-phenylureidoethyl)-1-naphthylamin ist, wenn die Diazokomponente 2,4-Dinitro-6-bromanilin ist.

**2.** Dispersionsfarbstoffe der Formel

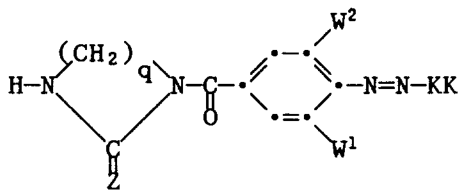

(2)

worin

| | |
|---|---|
| Z | O oder S, |
| $W^1$ und $W^2$ | unabhängig voneinander Wasserstoff, $C_1$-$C_4$-Alkyl, CN, $CF_3$, $C_1$-$C_4$-Alkylsulfonyl, Halogen, wie Brom oder Chlor, oder Nitro, und |
| q | eine ganze Zahl von 2 bis 6 und |
| KK | den Rest einer Kupplungskomponente bedeutet. |

**3.** Dispersionsfarbstoffe gemäss Anspruch 1, worin D den Rest einer Diazokomponente aus der Reihe Thienyl, Phenylazothienyl, Thiazolyl, Isothiazolyl, 1,2,4-Thiadiazolyl, 1,3,4-Thiadiazolyl, Benzthiazolyl, Pyrazolyl, 1,2,3-Triazolyl, 1,2,4-Triazolyl, Imidazolyl, oder Phenyl bedeutet, wobei diese Reste unsubstituiert oder durch Alkyl, Alkoxy, Alkylthio, Phenyl, Halogen, Trifluormethyl, Cyano, Nitro, Acyl, Benzoyl, Carboalkoxy, Alkylsulfon, Phenylsulfon, Phenoxysulfon, Sulfonamido oder Arylazo substituiert sind.

**4.** Dispersionsfarbstoffe gemäss Anspruch 3, worin D ein Benzthiazolylrest, welcher unsubstituiert ist oder ein- oder zweimal durch Chlor substituiert ist oder ein Phenylrest, der ein- oder zweimal substituiert ist durch Nitro, Chlor, Cyan, Methyl- oder Ethylsulfonyl oder Phenylazo ist.

**5.** Dispersionsfarbstoffe gemäss einem der Ansprüche 1, 3 oder 4, worin X Wasserstoff, Methyl, Methoxy, Chlor, Brom, Acetylamino oder Ureido ist.

**6.** Dispersionsfarbstoffe gemäss einem der Ansprüche 1, 3, 4 oder 5, worin Y Chlor, Methyl, Methoxy, Methoxyethyl, Methoxyethoxy oder vor allem Wasserstoff ist.

**7.** Dispersionsfarbstoffe gemäss einem der Ansprüche 1 oder 3-6, worin $R^2$ $C_1$-$C_4$-Alkyl, welches gegebenenfalls substituiert ist durch Hydroxy, oder $C_1$-$C_4$-Alkoxy ist.

**8.** Dispersionsfarbstoffe gemäss einem der Ansprüche 1 oder 3-7, worin $V^1$ ein Rest der Formel

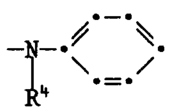 , 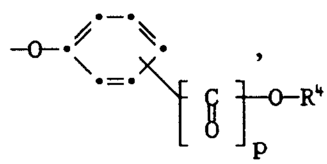 ,

$-NH-(CH_2)_3-CH_3$ oder

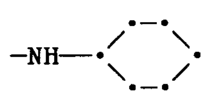

ist, worin
$R^4$ $C_1$-$C_4$-Alkyl und p 0 oder 1 bedeutet.

**9.** Dispersionsfarbstoffe gemäss Anspruch 2, worin KK den Rest eines Anilins, Naphthylamins oder Tetrahydrochinolins bedeutet, wobei diese Reste durch $C_1$-$C_4$-Alkyl, $C_1$-$C_4$-Alkylcarbonylamino, Phenyl

oder $C_1$-$C_4$-Alkylphenyl substituiert sein können.

**10.** Dispersionsfarbstoffe gemäss einem der Ansprüche 2 oder 9, worin $W^1$ und $W^2$ unabhängig voneinander Wasserstoff, Methyl, Methoxy, Chlor oder Nitro darstellen.

**11.** Dispersionsfarbstoffe gemäss Anspruch 1 oder 2 der Formeln

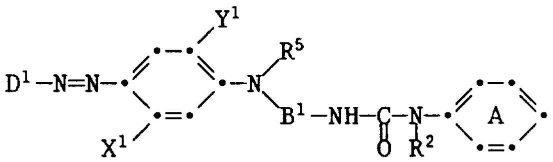

(4)

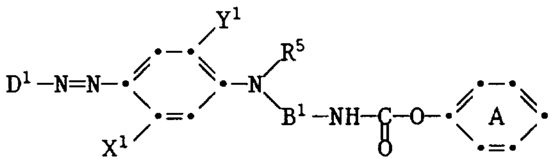

(5)

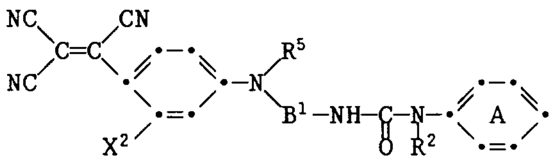

(6)

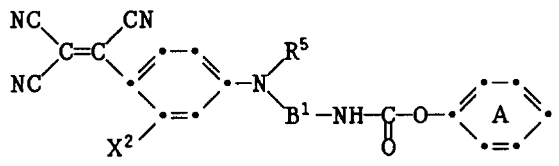

(7)

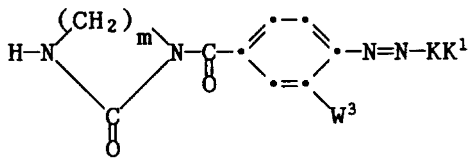

(8)

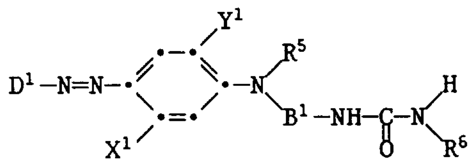

(9)

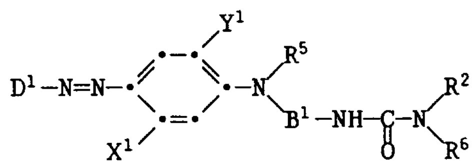

(10)

oder

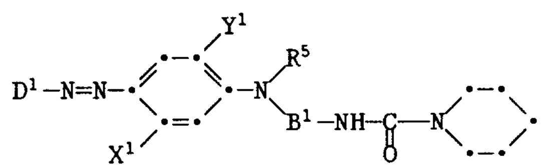

(20)

worin bedeuten:

- $D^1$ einen Benzthiazolylrest, welcher unsubstituiert ist oder ein- oder zweimal durch Chlor substituiert ist oder einen Phenylrest, der ein- oder zweimal substituiert ist durch Nitro, Halogen, Cyan, Methyl- oder Ethylsulfonyl oder Phenylazo,
- $X^1$ Wasserstoff, Methyl, Methoxy, Chlor, Brom oder $C_1$-$C_4$-Alkanoylamino,
- $Y^1$ Chlor, Methyl, Methoxy, Methoxyethyl, Methoxyethoxy oder Wasserstoff,
- $X^2$ Wasserstoff, Methyl, Methoxy, Chlor oder Brom,
- $R^2$ $C_1$-$C_6$-Alkyl,
- $R^5$ $C_1$-$C_4$-Alkyl, welches unsubstituiert ist oder durch Hydroxy, Cyan, $C_1$-$C_4$-Alkoxy oder Phenyl substituiert ist,
- $R^6$ $C_1$-$C_6$-Alkyl oder $C_5$-$C_7$-Cycloalkyl,
- $B^1$ ein $C_2$-$C_4$-Alkylenrest, welcher unsubstituiert oder durch Hydroxy substituiert ist,
- A einen unsubstituierten oder durch $C_1$-$C_4$-Alkyl, $C_1$-$C_4$-Alkoxy, $C_1$-$C_4$-Alkoxycarbonyl oder Chlor substituierter Phenylring,
- m 2, 3 oder 4,
- $W^3$ Wasserstoff, Methyl, Methoxy, Chlor oder Nitro und
- $KK^1$ den Rest eines Anilins, Naphthylamins oder Tetrahydrochinolins, wobei diese Reste durch $C_1$-$C_4$-Alkyl, $C_1$-$C_4$-Alkylcarbonylamino, Phenyl oder $C_1$-$C_4$-Alkylphenyl substituiert sein können oder den Rest eines Hydroxypyridons, welches durch CN oder $C_1$-$C_{12}$-Alkyl substituiert ist.

**12.** Verfahren zur Herstellung der Farbstoffe gemäss Anspruch 1, dadurch gekennzeichnet, dass man ein diazotiertes Amin der Formel

D-$NH_2$ (11)

oder Tetracyanethylen mit einer Verbindung der Formel

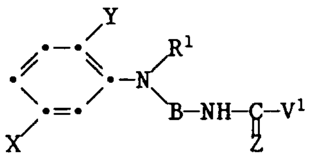

(12)

umsetzt.

**13.** Verfahren zur Herstellung der Farbstoffe gemäss Anspruch 2, dadurch gekennzeichnet, dass man eine Verbindung der Formel

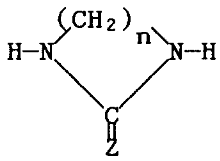

(17)

mit einer Verbindung der Formel

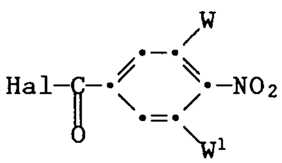

(18)

umsetzt, das erhaltene Reaktionsprodukt der Formel

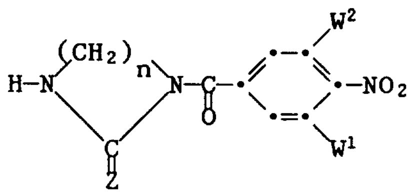

(19)

auf an sich bekannte Art und Weise zum entsprechenden Amin reduziert, diese diazotiert und mit einer Kupplungskomponente H-KK kuppelt.

**14.** Verwendung der Dispersionsfarbstoffe gemäss einem der Ansprüche 1 - 11 zum Färben oder Bedrucken von halbsynthetischem oder synthetischem hydrophobem Fasermaterial, insbesondere Textilmaterial.

**15.** Verwendung nach Anspruch 14 zum Färben oder Bedrucken von Textilmaterial aus Polyesterfasern.

**16.** Verfahren zum Färben oder Bedrucken von halbsynthetischem oder synthetischem hydrophobem Fasermaterial, insbesondere Textilmaterial, dadurch gekennzeichnet, dass man eine oder mehrere der in den Ansprüchen 1 - 11 definierten Verbindungen auf das gesamte Material aufbringt oder diesem einverleibt und anschliessend eine thermische Nachbehandlung während 30 bis 500 Sekunden bei 180 bis 240 ° C durchführt.

**17.** Verfahren gemäss Anspruch 16, dadurch gekennzeichnet, dass die thermische Nachbehandlung während 45 bis 200 Sekunden bei 200 bis 230 °C durchgeführt wird.

**18.** Das gemäss Anspruch 16 oder 17 gefärbte oder bedruckte Material.

## Claims

**1.** A disperse dye of the formula

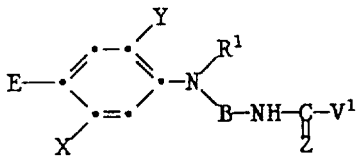

(1)

where

E is D-N=N- or

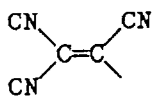

,

where D is the radical of a carbocyclic or heterocyclic diazo component other than aminobenzisothiazole,

X is hydrogen, $C_1$-$C_4$alkyl, $C_1$-$C_4$alkoxy, acylamino, halogen, $C_1$-$C_4$alkylsulfonylamino or a group of the formula -NH-CO-NHQ where Q is hydrogen, $C_1$-$C_4$alkyl or phenyl,

Y is hydrogen, halogen, $C_1$-$C_4$alkyl, $C_1$-$C_4$alkoxy, $C_1$-$C_4$alkoxy-$C_1$-$C_4$alkyl or $C_1$-$C_4$alkoxy-$C_2$-$C_4$alkoxy,

$R^1$ is $C_1$-$C_{12}$alkyl, $C_2$-$C_6$alkenyl or phenyl, or Y and $R^1$, together with the nitrogen atom and the two C atoms joining them, form a 5- or 6-membered ring,

B is a straight-chain or branched $C_2$-$C_6$alkylene radical,

Z is O or S and

$V^1$ is a radical

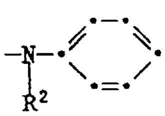

, 

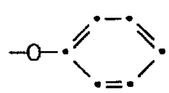

,

$-NHR^6$ ,

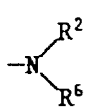

or

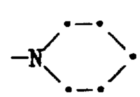

which may be substituted in the phenyl ring, by $C_1$-$c_4$alkyl, $C_1$-$C_4$alkoxy, $C_1$-$c_4$alkoxycarbonyl or halogen, where

$R^2$ is $C_1$-$C_6$alkyl and

$R^6$ is $C_1$-$C_6$alkyl or $C_5$-$C_7$cycloalkyl, where in the azo dyes the diazo component is not aminobenzisothiazole and the coupling component is not N-($\beta$-phenylureidoethyl)-1-naphthylamine when the diazo component is 2,4-dinitro-6-bromoaniline.

**2.** A disperse dye of the formula

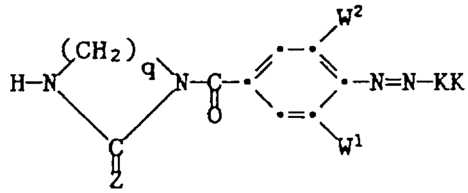

(2)

where

| | |
|---|---|
| Z | is O or S, |
| $W^1$ and $W^2$ | are each independently of the other hydrogen, $C_1$-$C_4$alkyl, CN, $CF_3$, $C_1$-$C_4$alkylsulfonyl, halogen, such as bromine or chlorine, or nitro, |
| q | is an integer from 2 to 6 and |
| KK | is the radical of a coupling component. |

**3.** A disperse dye according to claim 1, wherein D is the radical of a diazo component from the group consisting of thienyl, phenylazothienyl, thiazolyl, isothiazolyl, 1,2,4-thiadiazolyl, 1,3,4-thiadiazolyl, benzothiasolyl, pyrazolyl, 1,2,3-triazolyl, 1,2,4-triazolyl, imidazolyl and phenyl, which radicals are unsubstituted or substituted by alkyl, alkoxy, alkylthio, phenyl, halogen, trifluoromethyl, cyano, nitro, acyl, benzoyl, carboalkoxy, alkyl sulfone, phenyl sulfone, phenoxysulfone, sulfonamido or arylazo.

**4.** A disperse dye according to claim 3, wherein D is a benzothiazolyl radical which is unsubstituted or monosubstituted or disubstituted by chlorine or is a phenyl radical which is monosubstituted or disubstituted by nitro, chlorine, cyano, methylsulfonyl, ethylsulfonyl or phenylazo.

**5.** A disperse dye according to any one of claims 1, 3 and 4, wherein X is hydrogen, methyl, methoxy, chlorine, bromine, acetylamino or ureido.

**6.** A disperse dye according to any one of claims 1, 3, 4 and 5, wherein Y is chlorine, methyl, methoxy, methoxyethyl, methoxyethoxy or in particular hydrogen.

**7.** A disperse dye according to any one of claims 1 and 3-6, wherein $R^2$ is $C_1$-$C_4$alkyl which may be substituted by hydroxyl, or is $C_1$-$C_4$alkoxy.

**8.** A disperse dye according to any one of claims 1 and 3-7, wherein $V^1$ is a radical of the formula

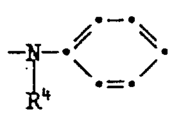 , 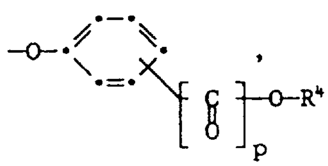 ,

$-NH-(CH_2)_3-CH_3$ or

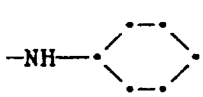

where $R^4$ is $C_1$-$C_4$alkyl and p is 0 or 1.

**9.** A disperse dye according to claim 2, wherein KK is the radical of an aniline, of a naphthylamine or of a tetrahydroquinoline, which radicals may be substituted by $C_1$-$C_4$alkyl, $C_1$-$C_4$alkylcarbonylamino, phenyl or $C_1$-$C_4$alkylphenyl.

**10.** A disperse dye according to either of claims 2 and 9, wherein $W^1$ and $W^2$ are each independently of the other hydrogen, methyl, methoxy, chlorine or nitro.

**11.** A disperse dye according to claim 1 or 2 of the formula

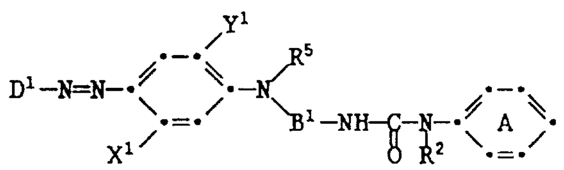

(4)

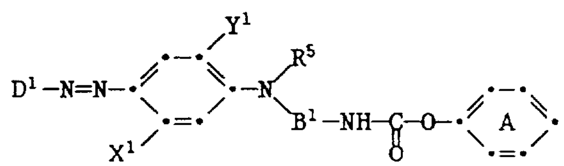

(5)

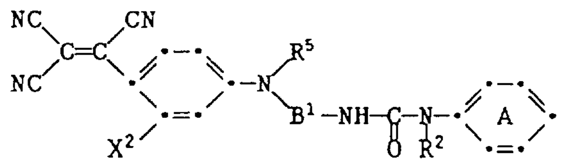

(6)

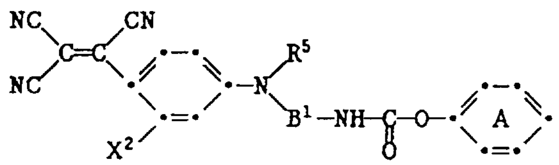

(7)

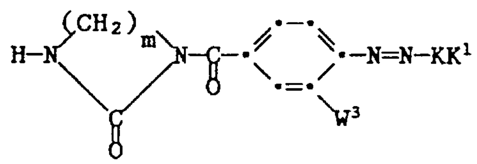

(8)

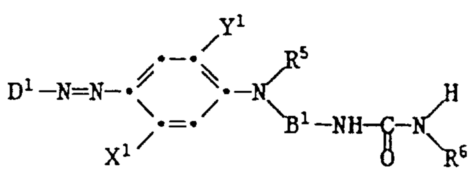

(9)

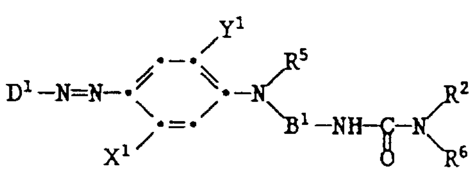

(10)

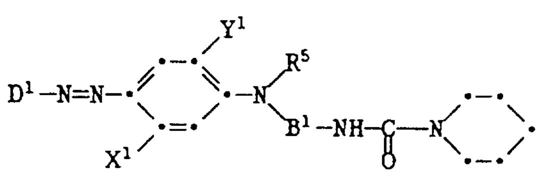

(20)

where

- $D^1$ is a benzothiazolyl radical which is unsubstituted or monosubstituted or disubstituted by chlorine or is a phenyl radical which is monosubstituted or disubstituted by nitro, halogen, cyano, methylsulfonyl, ethylsulfonyl or phenylazo,
- $X^1$ is hydrogen, methyl, methoxy, chlorine, bromine or $C_1$-$C_4$alkanoylamino,
- $Y^1$ is chlorine, methyl, methoxy, methoxyethyl, methoxyethoxy or hydrogen,
- $X^2$ is hydrogen, methyl, methoxy, chlorine or bromine,
- $R^2$ is $C_1$-$C_6$alkyl,
- $R^5$ is $C_1$-$C_4$alkyl which is unsubstituted or substituted by hydroxyl, cyano, $C_1$-$C_4$alkoxy or phenyl,
- $R^6$ is $C_1$-$C_6$alkyl or $C_5$-$C_7$cycloalkyl,
- $B^1$ is a $C_2$-$C_4$alkylene radical which is unsubstituted or substituted by hydroxyl,
- A is a phenyl ring which is unsubstituted or substituted by $C_1$-$C_4$-alkyl, $C_1$-$C_4$alkoxy, $C_1$-$C_4$alkoxycarbonyl or chlorine,
- m is 2, 3 or 4,
- $W^3$ is hydrogen, methyl, methoxy, chlorine or nitro and
- $KK^1$ is the radical of an aniline, naphthylamine or tetrahydroquinoline, each of which may be

substituted by $C_1$-$C_4$alkyl, $C_1$-$C_4$alkylcarbonylamino, phenyl or $C_1$-$C_4$alkylphenyl, or is the radical of a hydroxypyridone which is substituted by CN or $C_1$-$C_{12}$alkyl.

**12.** A process for preparing a dye according to claim 4, which comprises reacting a diazotized amine of the formula

$D\text{-}NH_2$ (11)

or tetracyanoethylene with a compound of the formula

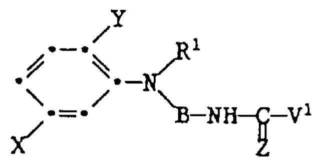

(12)

**13.** A process for preparing a dye according to claim 2, which comprises reacting a compound of the formula

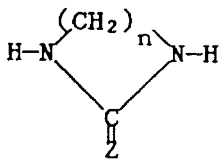

(17)

with a compound of the formula

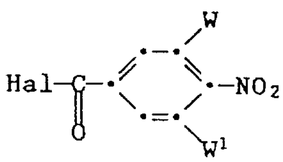

(18)

reducing the resulting reaction product of the formula

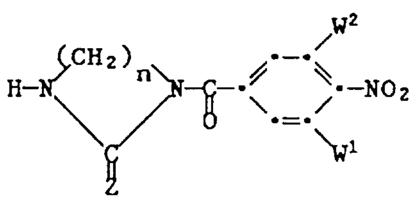

(19)

in a conventional manner to the corresponding amine, diazotizing the latter, and coupling to a coupling component H-KK.

**14.** The use of a disperse dye according to any one of claims 1-11 for dyeing or printing cellulosic or synthetic hydrophobic fibre material, in particular textile material.

**15.** The use according to claim 14 for dyeing or printing textile material made of polyester fibres.

**16.** A process for dyeing or printing cellulosic or synthetic hydrophobic fibre material, in particular textile material, which comprises applying to the entire material, or incorporating thereinto, one or more of the compounds defined in claims 1-11 and then performing a thermal aftertreatment at 180 to 240 °C for 30 to 500 seconds.

**17.** A process according to claim 16, wherein the thermal aftertreatment is carried out at 200 to 230 °C for 45 to 200 seconds.

**18.** The material dyed or printed according to claim 16 or 17.

**Revendications**

**1.** Colorants dispersés de formule :

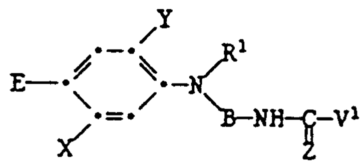

(1)

dans laquelle

E représente un groupe D-N = N- ou

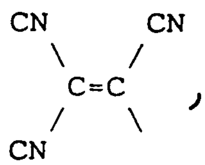

,

D représentant le reste d'un composant diazo carbocyclique ou hétérocyclique, à l'exception de l'aminobenzisothiazole,

X représente un atome d'hydrogène ou d'halogène, ou un groupe alkyle en $C_1$-$C_4$, alcoxy en $C_1$-$C_4$, acylamino ou alkyl($C_1$-$C_4$)sulfonylamino, ou un groupe de formule -NH-CO-NHQ, Q représentant un atome d'hydrogène ou un groupe alkyle en $C_1$-$C_4$ ou phényle,

Y représente un atome d'hydrogène ou d'halogène, ou un groupe alkyle en $C_1$-$C_4$, alcoxy en $C_1$-$C_4$, alcoxy($C_1$-$C_4$)alkyle($C_1$-$C_4$) ou alcoxy($C_1$-$C_4$)alcoxy($C_2$-$C_4$),

$R^1$ représente un groupe alkyle en $C_1$-$C_{12}$, alcényle en $C_2$-$C_6$ ou phényle, ou bien Y et $R^1$ forment, avec l'atome d'azote et les deux atomes de carbone qui les relient, un cycle à 5 ou 6 chaînons,

B représente un groupe alkylène en $C_2$-$C_6$, à chaîne droite ou ramifiée,

Z représente O ou S, et

$V^1$ représente un groupe

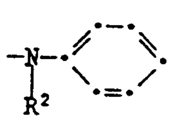

,

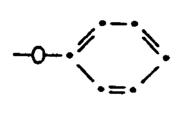

,

$-NHR^6$ ,

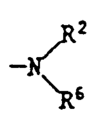

ou

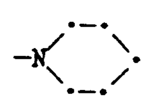

ou ledit groupe étant éventuellement substitué sur le noyau phényle par un groupe alkyle en $C_1$-$C_4$, un groupe alcoxy en $C_1$-$C_4$, un groupe alcoxy($C_1$-$C_4$)carbonyle ou un atome d'halogène, $R^2$ représentant un groupe alkyle en $c_1$-$c_6$ et $R^6$ représentant un groupe alkyle en $C_1$-$C_6$ ou cycloalkyle en $C_5$-$C_7$,

le composant diazo D des colorants azoïques n'étant pas un aminobenzisothiazole éventuellement substitué et le copulant n'étant pas la N-($\beta$-phényluréidoéthyl)-1-naphtylamine lorsque le composant diazo est la 2,4-dinitro-6-bromoaniline.

**2.** Colorants dispersés de formule :

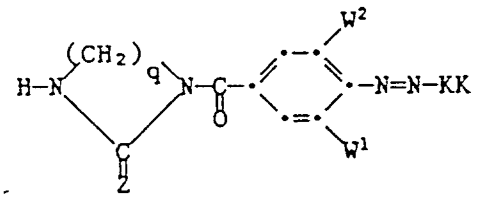

(2)

dans laquelle

| | |
|---|---|
| Z | représente O ou S, |
| $W^1$ et $W^2$ | représentent chacun, indépendamment l'un de l'autre, un atome d'hydrogène, un atome d'halogène, comme un atome de brome ou de chlore, ou un groupe alkyle en $C_1$-$C_4$, CN, $CF_3$, alkyl($C_1$-$C_4$)sulfonyle ou nitro, |
| q | représente un nombre entier de 2 à 6 et |
| KK | représente le reste d'un copulant. |

**3.** Colorants dispersés selon la revendication 1, pour lesquels D représente le reste d'un composant diazo appartenant à la série thiényle, phénylazothiényle, thiazolyle, isothiazolyle, 1,2,4-thiadiazolyle, 1,3,4-thiadiazolyle, benzothiazolyle, pyrazolyle, 1,2,3-triazolyle, 1,2,4-triazolyle, imidazolyle ou phényle, ce reste étant non substitué ou substitué par un ou plusieurs substituants pris parmi les atomes d'halogène et les groupes alkyle, alcoxy, alkylthio, phényle, trifluorométhyle, cyano, nitro, acyle, benzoyle, carboalcoxy, alkylsulfonyle, phénylsulfonyle, phénoxysulfonyle, sulfonamido et arylazo.

**4.** Colorants dispersés selon la revendication 3, pour lesquels D représente un groupe bensothiazolyle, non substitué ou substitué par un ou deux atomes de chlore, ou un groupe phényle substitué par un ou deux substituants pris parmi l'atome de chlore et les groupes nitro, cyano, méthylsulfonyle, éthylsulfonyle et phénylazo.

**5.** Colorants dispersés selon l'une quelconque des revendications 1, 3 et 4, pour lesquels X représente un atome d'hydrogène, de chlore ou de brome, ou un groupe méthyle, méthoxy, acétylamino ou uréido.

**6.** Colorants dispersés selon l'une quelconque des revendications 1, 3, 4 et 5, pour lesquels Y représente un atome de chlore, un groupe méthyle, méthoxy, méthoxyéthyle ou méthoxyéthoxy, ou surtout un atome d'hydrogène.

**7.** Colorants dispersés selon l'une quelconque des revendications 1 et 3 à 6, pour lesquels $R^2$ représente un groupe alkyle en $C_1$-$C_4$, qui est éventuellement substitué par un groupe hydroxy ou alcoxy en $C_1$-$C_4$.

**8.** Colorants dispersés selon l'une quelconque des revendications 1 et 3 à 7, pour lesquels $V^1$ représente un groupe de formule :

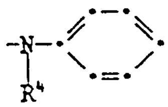 , 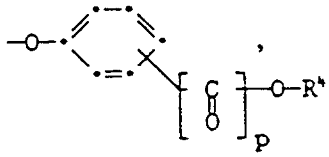 ,

$-NH-(CH_2)_3CH_3$ ou

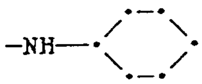

ou dans lesquelles $R^4$ représente un groupe alkyle en $C_1$-$C_4$ et p est égal à 0 ou 1.

**9.** Colorants dispersés selon la revendication 2, pour lesquels KK représente le reste d'une aniline, d'une naphtylamine ou d'une tétrahydroquinoléine, ce reste pouvant être substitué par un ou plusieurs substituants pris parmi les groupes alkyle en $C_1$-$C_4$, alkyl($C_1$-$C_4$)carbonylamino, phényle et alkyl($C_1$-$C_4$)phényle.

**10.** Colorants dispersés selon la revendication 2 ou 9, pour lesquels $W^1$ et $W^2$ représentent chacun, indépendamment l'un de l'autre, un atome d'hydrogène ou de chlore, ou un groupe méthyle, méthoxy ou nitro.

**11.** Colorants dispersés selon la revendication 1 ou 2, répondant à la formule :

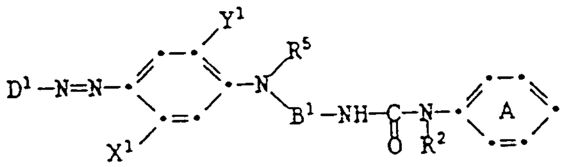

(4)

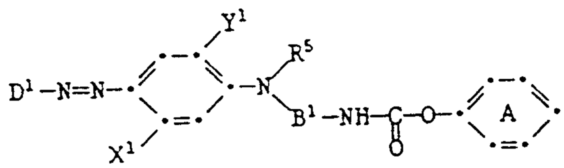

(5)

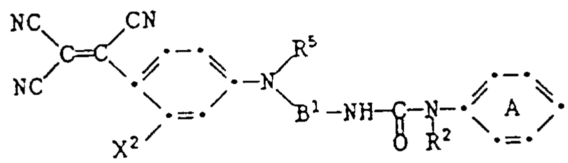

(6)

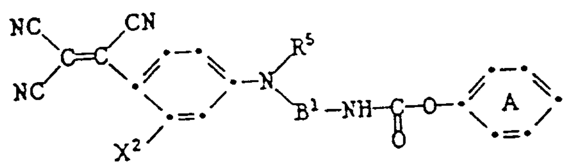

(7)

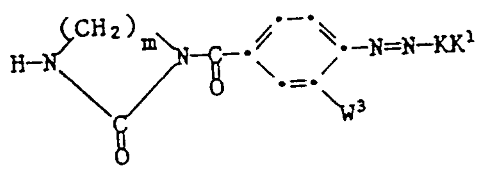

(8)

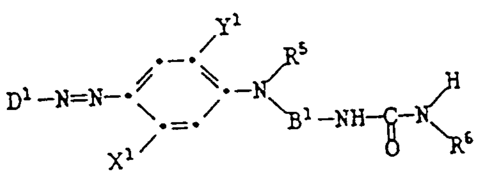

(9)

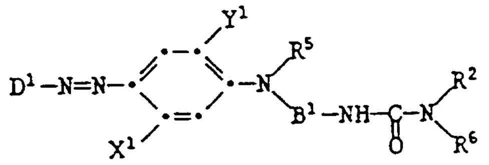

(10)

ou

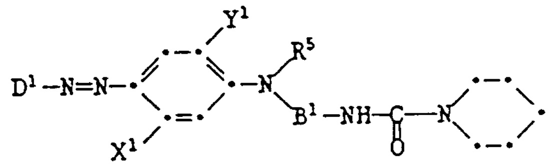

(20)

formules dans lesquelles :

- $D^1$ représente un groupe benzothiazolyle, non substitué ou substitué par un ou deux atomes de chlore, ou un groupe phényle substitué par un ou deux substituants pris parmi les atomes d'halogène et les groupes nitro, cyano, méthylsulfonyle, éthylsulfonyle et phénylazo,
- $X^1$ représente un atome d'hydrogène, de chlore ou de brome, ou un groupe méthyle, méthoxy ou alcanoyl($C_1$-$C_4$)amino,
- $Y^1$ représente un atome de chlore ou d'hydrogène, ou un groupe méthyle, méthoxy, méthoxyéthyle ou méthoxyéthoxy,
- $X^2$ représente un atome d'hydrogène, de chlore ou de brome, ou un groupe méthyle ou méthoxy,
- $R^2$ représente un groupe alkyle en $C_1$-$C_6$,
- $R^5$ représente un groupe alkyle en $C_1$-$C_4$, non substitué ou substitué par un groupe hydroxy, cyano, alcoxy en $C_1$-$C_4$ ou phényle,
- $R^6$ représente un groupe alkyle en $C_1$-$C_6$ ou cycloalkyle en $C_5$-$C_7$,
- $B^1$ représente un groupe alkylène en $C_2$-$C_4$, non substitué ou substitué par un groupe hydroxy,
- A représente un noyau phényle non substitué ou substitué par un groupe alkyle en $C_1$-$C_4$, alcoxy en $C_1$-$C_4$ ou alcoxy($C_1$-$C_4$)carbonyle, ou par un atome de chlore,
- m est égal à 2, 3 ou 4,
- $W^3$ représente un atome d'hydrogène ou de chlore, ou un groupe méthyle, méthoxy ou nitro, et
- $KK^1$ représente le reste d'une aniline, d'une naphtylamine ou d'une tétrahydroquinoléine, ce reste pouvant être substitué par un ou plusieurs substituants pris parmi les groupes alkyle en $C_1$-$C_4$, alkyl($C_1$-$C_4$)carbonylamino, phényle et alkyl($C_1$-$C_4$)phényle, ou le reste d'une hydroxypyridone qui est substituée par un groupe cyano ou alkyle en $C_1$-$C_{12}$.

**12.** Procédé de préparation des colorants selon la revendication 1, caractérisé en ce que l'on fait réagir le dérivé diazo d'une amine de formule :

$D\text{-}NH_2$ (11)

ou du tétracyanoéthylène avec un composé de formule :

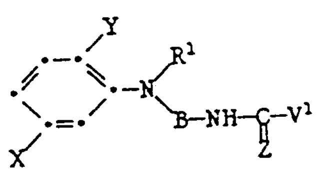

(12)

**13.** Procédé de préparation des colorants selon la revendication 2, caractérisé en ce que l'on fait réagir un composé de formule :

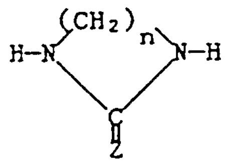

(17)

avec un composé de formule :

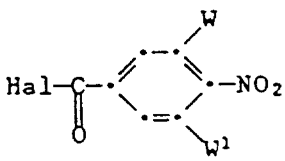

(18)

on réduit, par un procédé connu en soi, le produit de réaction obtenu de formule :

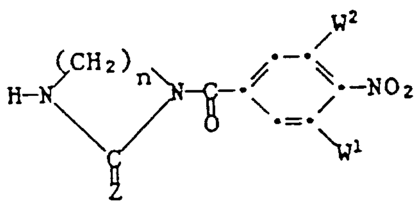

(19)

pour obtenir l'amine correspondante, on diazote cette dernière et on copule le dérivé diazo avec un copulant de formule H-KK.

**14.** Utilisation des colorants dispersés selon l'une quelconque des revendications 1 à 11, pour la teinture ou l'impression de matières fibreuses hydrophobes, semi-synthétiques ou synthétiques, en particulier de matières textiles.

**15.** Utilisation selon la revendication 14, pour la teinture ou l'impression de matières textiles constituées de fibres de polyester.

**16.** Procédé de teinture ou d'impression de matières fibreuses hydrophobes, semi-synthétiques ou synthétiques, en particulier de matières textiles, caractérisé en ce que l'on applique un ou plusieurs des composés définis dans les revendications 1 à 11 sur la totalité de la matière ou l'incorpore à cette dernière, puis réalise un traitement thermique ultérieur pendant 30 à 500 secondes, à une température de 180 à 240 °C.

**17.** Procédé selon la revendication 16, caractérisé en ce que l'on réalise le traitement thermique ultérieur pendant 45 à 200 secondes, à une température de 200 à 230 °C.

**18.** Matière teinte ou imprimée par le procédé selon la revendication 16 ou 17.